# EUROPEAN PATENT APPLICATION

(11) **EP 4 764 418 A1**
(43) Date of publication of application: **24.06.2026**
(21) Application number: 24223110.8
(22) Date of filing: 23.12.2024
(51) Int. Cl.: G01C 21/36, G01C 21/00

(54) **PROCESSING DIGITAL MAP DATA**

(71) Applicant: TomTom Navigation B.V., 1011 AC Amsterdam (NL)
(72) Inventor: Ivannikov, Yevhen Yuriiovych, 1011 AC Amsterdam (NL)
(74) Representative: Dehns

(57) **Abstract**

A computer-implemented method of determining Right of Way (ROW) data for travel along a given road segment entering a decision path on a path being travelled by a vehicle involves analysing digital map data to identify traffic sign(s) represented by the map data along road stretches incoming to the decision point, including a stretch including the given road segment and other road stretches including other incoming road segments to the decision point. The traffic signs found are used to determine ROW data for the vehicle at the decision point. The ROW data is provided to an ADS or ADAS of the vehicle for use thereby.

## Description

### BACKGROUND OF THE INVENTION

This invention relates to methods, apparatus and software for processing digital map data. In particular, the present invention relates to methods, apparatus and software for determining Right of Way (ROW) data using digital map data.

It is known to generate, maintain and distribute digital map information for use in navigation systems, Advanced Driving Application Systems (ADAS), and Automated Driving Application Systems (ADS). For road vehicles, digital map data may describe a road network in an area (e.g. a country), represented as a graph comprising arcs (i.e. edges) representing road segments of the digital map, and vertices (i.e. nodes) representing connections of the digital map. The connections of the digital map may represent exits, end points or decision points of the road network, such as road junctions, or may represent locations at which an attribute of the road changes, such as a change of speed limit. Each arc and node in the map may be associated with one or more attributes that describe a feature of the road segment or the connection point. The features may be abstract or physical, such as average speed of travel, legal speed limit, direction of travel, length of the road segment, average turn time for a junction, shape of the road segment, or number of lanes. These attributes may be used by a variety of applications that operate based on the map data.

Right of way (ROW) is one type of information that is useful to systems, such as ADAS or ADS, supporting vehicles travelling through a road network. For example, such information may be used by ADAS (such as L2E automation systems) to assist in negotiation of junctions, as well as in applications supporting driving optimization in relation to desired criteria e.g. fuel economy. For example, ROW may be used in determining an anticipated number of deceleration/acceleration cycles to better estimate fuel consumption associated with a path.

ROW data relates to whether a vehicle has right of way i.e. priority over other vehicles to proceed at a decision point of the road network e.g. junction. Where a vehicle has right of way, it has priority over other vehicles. ROW is defined by applicable rules governing traversal of the particular decision point. The rules may be based upon the relevant driving regulations applicable to a geographic area in which the decision point is found and/or factors specific to the particular decision point.

ROW data may be conveyed to a human driver explicitly e.g. using traffic signs (such as stop, yield, priority road etc), or implicitly (based on local regulations e.g. governing which vehicles have priority at roundabouts, or stating that vehicles on gravel/dirt roads must yield to traffic on paved roads). While the ability to obtain ROW data is useful to systems supporting driving e.g. ADAS or ADS, the applicant has recognised that it is not straightforward for the systems to obtain such data.

The Applicant has realised that there remains a need for improved computer implemented methods of obtaining ROW data in respect of a decision point of a road network.

### SUMMARY

In accordance with the invention there is provided a computer-implemented method of determining Right of Way (ROW) data in respect of travel along a given road segment entering a decision point of a road network in a geographic area covered by a digital map, the method comprising;
analysing digital map data relating to one or more road stretches entering the decision point to identify one or more traffic signs represented by the digital map data along the one or more road stretches that are relevant to ROW at the decision point, each road stretch comprising at least a respective road segment entering the decision point;
and using data indicative of the identified one or more relevant traffic signs to determine data indicative of ROW at the decision point for travel along the given road segment entering the decision point.

The present invention therefore analyses digital map data relating to one or more road stretches entering a decision point of the road network to identify one or more traffic signs represented by the digital map along the one or more road stretch(es) relevant to ROW at the decision point, and uses data indicative of the identified relevant traffic signs to determine data indicative of ROW at the decision point for travel along a given road stretch entering the decision point.

In accordance with the invention, digital map data, or more specifically, traffic sign data forming part of the digital map data, is used to derive ROW data in respect of travel along the given road segment entering the decision point. This avoids the need to include ROW data in the digital map itself i.e. as part of a map making process. Instead, ROW data may be determined as and when required, in respect of a given road segment of interest, making use of the digital map data - in particular traffic sign data - that is available. This has a number of advantages.

As the ROW data is derived in accordance with the invention using (other) digital map data rather than itself being provided as part of the digital map data, the ROW data may be obtained without adding to the complexity of the digital map data or introducing additional requirements in terms of map storage, delivery or maintenance. It is desirable in digital cartography to minimise data stored and avoid storing "redundant features". Adding ROW data to a map would involve additional map-making processes to derive and maintain the ROW feature based on other map features (since ROW is not a primary map feature, but instead must be derived from other map features). Furthermore, the inclusion of such ROW data would result in an additional dependency between map features, making it more onerous to maintain the digital map. Including ROW data in the digital map to support any ROW determination which might be required by a map user would involve generating and storing a large amount of additional map data. For example, an N-way intersection can require up to C(N, K) assignments of ROW, where C(N, K) is the number of combinations (N choose K). The inclusion of such additional data would also impart additional requirements in computing, storing and delivering the map to client devices e.g. over the air (OTA). This in turn would add to the demands placed on OTA delivery systems.

By determining ROW data using digital map data, the present invention also overcomes the drawbacks associated with camera- based systems which may provide limited ROW data. The use of traffic sign data associated with digital map data enables priority of vehicles travelling along incoming road stretches approaching the decision point other than an incoming road stretch including the given road segment (e.g. a currently travelled road segment) to be taken into account. This may enable ROW to be determined with greater accuracy and/or where there is no relevant traffic sign associated with the given road segment entering the decision point. For example, the Applicant has realised that in some cases ROW for travel along a given road segment of a road stretch entering a decision point may best be inferred by consideration of ROW for vehicles travelling toward the decision point along other incoming road stretches. Where such vehicles do not have priority e.g. where a stop or yield sign is provided in respect of those other incoming road stretches into the decision point, it may be possible to infer that the vehicle travelling along the given road segment does have priority. This would not be possible using camera data, for example, which would only show the immediate vicinity of the vehicle in its direction of travel.

It is also possible to determine ROW further ahead of a decision point. ROW data may be determined for any decision point of the map where relevant traffic sign data exists. This may better support the ability of vehicle systems such as ADAS or ADS to plan or optimise routes. In comparison, camera based systems can only take into account any traffic sign visible to the camera of a vehicle. Typically this will only be traffic signs in a close vicinity to a current position of a vehicle in its direction of travel.

The data indicative of ROW that is determined herein refers to data indicative of whether a (or the) vehicle travelling along the given road segment entering the decision point (the given incoming road segment) has right of way i.e. priority over vehicles entering the decision point along other road segments (other incoming road segments). The ROW determination considers drivable road segments i.e. that are drivable by vehicles. The ROW data may be a simple binary indication that the vehicle does or does not have ROW over vehicles travelling along all other road segments incoming to the decision point. However, the ROW data may convey a more sophisticated determination regarding ROW at the decision point e.g. indicative of whether the vehicle traveling along the given road segment must yield to vehicles travelling along all other incoming road segments or only to vehicles travelling along certain ones of the incoming road segments. For example, at a roundabout in the UK, a vehicle may only need to yield to vehicles entering the roundabout along one or more incoming road segments to the right of the given road segment. The form of ROW data may depend upon the requirements of an ADS or ADAS system that is to use the data. For example, the ADASIS standard, which relates to an interface providing data to the ADS or ADAS system of a vehicle currently cannot support rich ROW determination, allowing only two meaningful outcomes, namely ROW=TRUE or FALSE. The other supported options (ROW=UNKNOWN or NOT AVAILABLE) do not increase situational awareness of an ADS or ADAS system.

The decision point in respect to which the methods of the present invention are performed is a decision point of a road network in a geographic area covered by a digital map. The decision point may be any type of decision point represented by the digital map at which two or more possible outgoing road segments exist for the given (incoming) road segment. The decision point may be between three or more road segments or roads. The real world decision point will correspondingly have such road segments. While digital maps may include nodes having only one incoming and one outgoing arc representing road segments, such "artificial" nodes included for the purpose of map making do not represent a decision point of the road network in the real world.

The decision point may be any form of intersection, roundabout, junction, crossing, divergence of a path, etc. The term "decision point" as used herein also encompasses a plural junction where individual junctions are close together. In these cases road segments emanating from each junction may be considered to approximately emanate from a single decision point, and may be treated as such.

In general, the digital map data comprises arcs that represent road segments of the digital map, and that connect nodes representing connections of the digital map. The road segments of the digital map represent road segments of the road network in the geographic area covered by the digital map i.e. in the real world. At least some of the connections of the digital map represent decision points of the road network in the area covered i.e. in the real world. For example, the connections of the digital map may represent exits, end points or decision points of the road network, such as road junctions, or may represent locations at which an attribute of the road changes, such as a change of speed limit.

The digital map data comprises data representing at least the decision point, the given road segment entering the decision point and the one or more road stretches entering the decision point.

In accordance with the invention, ROW data is determined in respect of travel along a given road segment entering the decision point. The given road segment is a road segment for travel in a direction toward the decision point. The given road segment is an incoming road segment to the decision point. The given road segment ends at the decision point.

The given road segment incoming to the decision point (and any other road segments incoming to the decision point discussed herein) may be a directed road segment in respect of travel in a direction toward the decision point. A corresponding (directed) road segment may exist for travel in a direction outward from the decision point. References to incoming or outgoing road segments herein may therefore refer to directed road segments for travel in the applicable direction relative to the decision point.

It will be appreciated that there are various ways in which a digital map may represent road segments of a road network for travel in different directions. While the methods and systems herein are described with particular reference to the case in which directed road segments are used, which are associated with a specific direction of travel along a particular path in the road network, and of which there may therefore be two for road segments which allow travel in each direction, in other forms of digital maps, a different modelling is possible wherein a single segment can represent both driving directions, and which may have directed attributes associated with it which are specific to a certain direction of travel . In what follows it is assumed that the map data includes directed road segments. However, it will be appreciated that the methods and systems in any of the aspects or embodiments described herein may be applied to other map conventions. The skilled person will readily appreciate how to adapt the methods and systems to other forms of map convention. Thus an incoming segment to the decision point may be an undirected segment for travel toward the decision point having directed attribute(s) associated therewith (with the same segment also representing travel in an opposite direction away from the decision point with corresponding attributes for that direction), or may be a specific incoming segment of the digital map representing a path for travel toward the decision point, with a different segment of the map representing travel along the path in an opposite direction outgoing from the decision point (i.e. according to the "directed segment" implementation).

In accordance with the invention in any of its aspects or embodiments, the given road segment may be any segment entering a decision point for which it is of interest to obtain ROW data. Preferably the given road segment entering the decision point in respect of which ROW is determined forms part of a path for a vehicle through the road network and the decision point is a decision point along the path of the vehicle. The method of determining ROW data is thus with respect to a given road segment forming part of a path of a vehicle and provides ROW data at the decision point for travel along the given segment entering the decision point as part of the vehicle path.

A path as referred to herein includes at least a portion of one or more road segments. A path is representative of a trajectory that may be taken by a vehicle through the road network. A path is defined in the digital map data by at least a portion of one or more road segments of the digital map.

In embodiments in which the given road segment forms part of a path for a vehicle through the road network, the path of the vehicle extends through the decision point and includes at least the given road segment entering the decision point or at least a portion thereof, and a continuation road segment outgoing from the decision point. The path may include one or more additional road segments preceding the given road segment and/or subsequent to the continuation road segment. The path therefore includes at least a portion of a plurality of road segments. The road segments are sequential.

The path for the vehicle may be a predicted path e.g. most probable path (MPP) of the vehicle and/or may be a calculated route. It may more generally be any predetermined path, for example determined as part of a route optimization process.

Where the path is a predicted path e.g. MPP, the predicted path may be a predicted path e.g. MPP of a vehicle horizon. As used herein, the term "horizon" refers to a driving horizon for use by an ADAS or ADS of a vehicle. The horizon includes a prediction of one or more paths that the vehicle may travel in the immediate future through a portion of a road network or data enabling such a prediction to be made. Determination of a vehicle horizon involves predicting the path or paths that the vehicle may travel in the immediate future, to ensure that the necessary data is transmitted to vehicle systems to allow implementation of ADAS or ADS functions by the vehicle subsystems as the vehicle travels.

A calculated route may be a calculated route between an origin and destination. A calculated route may be calculated by any navigation system, whether forming part of an ADAS or ADS of the vehicle, or otherwise. For example a route may be calculated by any suitable navigation app, whether run on a vehicle system or a device such as a smartphone or standalone satellite navigation device (whether located in the vehicle or not), or on a server.

In some cases, where a calculated route exists, a predicted path e.g. MPP may follow the calculated route. Thus, in some cases, the path may be both a predicted path e.g. MPP and a calculated route i.e. a predicted path e.g. MPP that corresponds to a calculated route. In the presence of a calculated route, a vehicle horizon may be obtained at least in part along the calculated route.

The path may be a path of a vehicle. Preferably the path of the vehicle through the road network is a path being traversed by the vehicle and the decision point is an upcoming decision point along the path. The method then comprises determining the ROW data during travel of the vehicle along the path through the network. In this way, the method may be performed "on the fly" during travel of the vehicle. By using traffic sign data associated with digital map data, the present invention enables ROW data to be efficiently obtained in respect of given road segments of interest as required during travel, supporting determination of ROW on an ad hoc basis as and when required. The method may then be performed at runtime using the map. However it is envisaged that the method could be performed to determine ROW data in respect of a given road segment of a path for a vehicle other than during traversal of the path e.g. before travel commences for a predicted path or calculated route. This may, for example, support route optimization.

Where the path is a path currently being traversed by the vehicle, the upcoming decision point may be the next decision point to be encountered by the vehicle along the path. However, the method may also be used to determine ROW data in respect of an upcoming decision point that is not the next decision point to be encountered by the vehicle i.e. which is further along the route. This may support optimization applications, such as fuel optimization.

Where the upcoming decision point is the next decision point to be encountered by the vehicle along the path, the current position of the vehicle may be on the given road segment entering the decision point. However, the current position may instead be on a road segment further back along the route. The current position may, more generally, be on a road stretch comprising the given road segment entering the decision point.

In accordance with any of the embodiments of the invention in which the given road segment forms part of a path for a vehicle through the road network, whether or not the path is being traversed by the vehicle, the method is preferably performed on board the vehicle. The method is preferably performed by a client device associated with the vehicle. Such embodiments are particularly, although not exclusively advantageous in conjunction with preferred embodiments in which the path is a path currently being traversed by a vehicle with the ROW data being determined during travel along the path.

The client device associated with the vehicle may be in-built or otherwise located within the vehicle (e.g. comprising a smartphone of a driver or a standalone satellite navigation device). The client device may be or comprise the vehicle, or a processing system of the vehicle.

However, the present invention is not limited to the method being performed on board a vehicle i.e. by a client device associated with the vehicle, whether or not the given segment forms part of a path for a vehicle through the road network. For example, in accordance with the method of the invention in any of its aspects or embodiments, the method may be performed by a server or by a client device, or combinations thereof. At least some of the steps of the method may thus be performed by a server or by a client device.

In accordance with the invention the method comprises analysing digital map data relating to one or more road stretches entering the decision point to identify one or more traffic signs represented by the digital map along the road stretch(es) relevant to ROW at the decision point.

Each road stretch for which digital map data is analysed to identify the one or more traffic signs relevant to ROW at the decision point comprises at least a respective road segment entering the decision point. Each such road segment is a road segment for travel in a direction toward the decision point. Each road segment is an incoming road segment to the decision point. The road segment ends at the decision point. A road stretch including a respective road segment entering the decision point may be referred to herein as an incoming road stretch.

Each road stretch for which digital map data is analysed to identify traffic signs comprises at least a respective (different) road segment entering the decision point. Each road stretch for which digital map data is analysed may correspond to the respective road segment entering the decision point or a portion thereof, or may comprise one or more additional preceding road segments or portions thereof. As will be discussed later, when identifying relevant traffic signs for ROW determination, this may involve analysing digital map data relating to the road segment of the stretch entering the decision point, and/or of one or more preceding road segments or portions of the road stretch leading up to the decision point.

The method of the present invention may involve considering only one incoming road stretch or may involve considering multiple incoming road stretches when performing the analysis to identify traffic signs. The selection as to which road stretches are considered may be based on various factors. For example, this may depend upon the complexity or type of decision point e.g. how many incoming road stretches are present, constraints on available processing power, the level of reliability required for the determination of ROW and whether relevant traffic sign data is already found based on consideration of one or more road stretches such that it is not necessary to look further. The number of road stretches to consider may be predetermined e.g. for different scenarios, or the method may proceed to consider road stretches in a particular order e.g. starting with one including the given road segment, and only looking to a next road stretch if sufficient traffic sign data is not already identified, or alternatively to consider road stretches including all incoming drivable road segments. Consideration of further road stretch(es) may thus be conditional or unconditional on the results of consideration of previous road stretch(es).

Where multiple road stretches are considered to obtain traffic sign data, this may be performed sequentially or at least in part in parallel. Alternatively or additionally, where a road stretch considered in identifying traffic sign data includes more than one road segment, analysis of the digital map data relating to the road segments of the stretch may be performed sequentially or at least in part in parallel. As set out below, typically this is performed sequentially, with additional segments being considered if necessary to provide relevant traffic sign data.

Alternatively or additionally, where more than one road segment of multiple road stretches are considered, consideration of different road segments of a particular road stretch and consideration of different road stretches may also be performed sequentially or at least in part in parallel. Any desired implementation may thus be used when identifying traffic signs associated with road stretches or road segments thereof that are to be considered, and may include at least some steps performed in parallel and/or at least some steps performed sequentially.

In some embodiments the one or more road stretches for which digital map data is analysed to obtain identify traffic signs include a road stretch comprising the given road segment. In other words, at least the road segment for which ROW data is required is itself analysed. If relevant traffic sign data present, this may enable a determination of ROW to be made without looking at further incoming road stretches and/or preceding road segments along the road stretch comprising the given road segment. However, it may be desired to look to further incoming road stretches and/or preceding road segment(s) to provide greater confidence in the result, or in situations where sufficient relevant traffic sign data has not been found associated with the given road segment. As stated above, consideration of any additional road stretches may be carried out sequentially or at least in part in parallel with consideration of the given road stretch.

Alternatively or additionally, the one or more road stretches entering the decision point for which digital map data is analysed may include at least one road stretch comprising a road segment entering the decision point other than the given road segment. Rather than (or in addition to) looking at a road stretch including the given road segment for which ROW data is required to identify traffic sign data, one or more other road stretches incoming to the decision point are considered. This provides the ability to determine ROW data to a greater level of confidence and/or in situations where a determination might not be possible by consideration only of the road stretch including the given road segment. Such an approach provides particular advantages over previous techniques. For example, this enables ROW to be determined where a camera based system, which can only "see" traffic signs associated with a road segment that is traversed by a vehicle, and then only in a direction of travel and in close proximity to the vehicle, would not be able to make a determination. Preferably the one or more road stretches for which digital map data is analysed include road stretches including two or more, or each other road segment entering the decision point.

The method may comprise analysing digital map data relating both to the road stretch comprising the given road segment and to at least one (or optionally at least two or each) road stretch comprising a road segment entering the decision point other than the given road segment to identify traffic signs relevant to ROW.

Where the given road segment forms part of a given path through the decision point, the path may have a continuation along a road segment extending away from the decision point. In such a case, the one or more road stretches entering the decision point for which digital map data is analysed may include a road stretch comprising a road segment incoming to the decision point which is in the opposite direction to the outgoing road segment for travel along the continuation of the path. In preferred embodiments in which the given road segment forms part of a path for a vehicle through the road network, the given path is the path of the vehicle. Thus, in this case, an "opposite" incoming road segment to the decision point is considered, the "opposite" incoming road segment being a road segment toward the decision point which is for travel in an opposite direction to the road segment for travel along a continuation of the path in the direction in which the vehicle is travelling. The opposite road segment is thus an incoming segment to the decision point along a path corresponding to the continuation of the path but directed in the opposite direction toward the decision point. An "opposite" road stretch is a road stretch including such an opposite incoming road segment. This step may be useful in determining ROW data where relevant traffic sign data is not found in relation to a road stretch including the given road segment or to provide greater confidence in a determination based on the road stretch including the given road segment or to confirm the outcome of a determination based thereon.

As stated earlier, while it is envisaged that the stretch including the given road segment may be considered first, and an opposite road stretch only if required, in other embodiments both road stretches may be considered regardless of whether sufficient traffic signs are found on the road stretch including the given road segment. Consideration of the road stretches may occur sequentially or simultaneously. Consideration of an opposite incoming road stretch may be useful since if vehicles travelling along this road stretch have ROW, it may be inferred that vehicles travelling along the given road segment also have ROW. It is noted that such an opposite road stretch may not always exist, and can only be considered in such cases where it does exist.

It is noted that in maps which use undirected road segments, the "opposite" road segment" would be the same road segment as the road segment continuing the path, but in such cases the directed attributes for travel in the direction of the decision point would be considered.

Alternatively or additionally, the one or more road stretches entering the decision point for which digital map data is analysed may include at least one road stretch comprising a road segment entering the decision point other than the given road segment and other than a road segment toward the decision point which in the opposite direction to the (outgoing) road segment for travel along the continuation of the path i.e. other than an "opposite road segment", if such a road segment indeed exists at the decision point. While reference is made to such opposite segments or stretches below, it should be appreciated that these may not always exist, depending whether there is a continuation of a path of the vehicle at the decision point and if so, whether travel in an opposite direction along this path is possible. It should therefore be understood that steps involving an opposite segment or stretch apply where such a segment or stretch exists at the decision point.

As discussed above, in some embodiments consideration of "other" incoming road stretches, whether or not these include an "opposite road stretch" may be carried out regardless of whether sufficient traffic signs relevant to ROW for vehicle travelling toward the decision point are found on the road stretch comprising the given road stretch if that is considered. Digital map data relating to the road stretches may then be analysed sequentially or at least in part in parallel.

In other embodiments, the road stretch including the given road segment may be considered (first), and one or more other road stretch may then be considered if necessary e.g. if no relevant traffic signs for determining ROW for the given road segment are identified relating to the road stretch including the given road segment, or if any relevant traffic sign(s) identified relating to the road stretch including the given road segment are determined to be insufficient to determine data indicative of ROW for the given road segment.

As referred to herein, traffic sign(s) found may be determined to be insufficient where they do not enable ROW to be determined using a chosen implementation at least to a desired level of confidence. A determination as to whether identified traffic signs are sufficient may, for example, be based on preset criteria and/or determined on a case by case basis.

In embodiments the method may comprise analysing digital map data relating to the road stretch comprising the given road segment to determine whether any traffic signs relevant to ROW for vehicles travelling toward the decision point are present, and, if no relevant traffic signs are found or if any relevant traffic sign(s) found are determined to be insufficient to determine data indicative of ROW for the given road segment, then analysing digital map data relating to at least one road stretch comprising a road segment entering the decision point other than the given road segment to identify one or more relevant traffic signs relevant to ROW. Thus, in this case, the road stretch including the given road segment may be considered first, and road stretch(es) including other incoming road segments only considered if necessary. A road stretch other than the given road segment entering the decision point which is considered may be any such road stretch, e.g. an "opposite" road stretch where the given segments forms part of a path through the decision point or another road stretch. Where further road stretch(es) are considered, these may be considered sequentially until sufficient traffic sign(s) to enable determination of the data indicative of ROW are obtained. In other embodiments, all "other" road stretches may be considered once it is found that the road stretch including the given road segment is not sufficient.

In some embodiments the one or more road stretches entering the decision point for which digital map data is analysed to identify traffic signs include road stretches comprising each road segment entering the decision point. Such road stretches will include a road stretch including the given road segment. In these embodiments road stretches including each drivable incoming road segment are considered. Consideration of each road stretch may be carried out sequentially or at least in part in parallel.

In any embodiment in which multiple "other" incoming road stretches are considered, whether or not including an "opposite" road stretch, analysis of the stretches may be carried out sequentially or at least in part in parallel. Consideration of different ones of the other incoming road stretches when performed sequentially may be performed on a conditional basis e.g. moving onto a next stretch dependent upon whether a ROW determination is possible based on a stretch already considered, or may involve unconditionally considering each of the multiple road stretches in turn.

As discussed previously, any road stretch entering the decision point considered when analysing digital map data to identify traffic signs may consist of a respective road segment entering the decision point or may include one or more (immediately) preceding road segments or portions thereof. A road stretch is a continuous road stretch. A road stretch may be a road stretch incoming to the decision point along a path of a vehicle or may be a road stretch comprising a road segment incoming to the decision point which is in the opposite direction to a road segment for travel along the continuation of such a path (an "opposite" road stretch), or may be a road stretch incoming to the decision point other than such an "opposite" road stretch.

While a road stretch may be predetermined e.g. it may be preset to consider only a road segment entering the decision point, or to also consider a predetermined number of preceding road segments, in embodiments, the extent of the road stretch may be determined as part of analysing the digital map data to determine the traffic signs.

In embodiments, for any road stretch analysed to identify traffic sign(s), the method may comprise analysing digital map data relating to a road segment entering the decision point to determine whether any traffic signs relevant to ROW for vehicles travelling toward the decision point are associated with the road segment, and if no such relevant traffic sign is found, analysing digital map data relating to a preceding road segment to determine whether any traffic signs relevant to ROW for vehicles travelling toward the decision point are present; and optionally repeating such steps until either i) a relevant traffic sign is found, ii) a predetermined search distance is reached or iii) a previous decision point is reached. It is noted in respect of condition iii) that there may be multiple road segments between the road segment incoming to the decision point and the previous decision point where the digital map includes nodes joining only two road segments. These constitute "artificial nodes" as discussed above, and do not represent real life decision points of the road network.

The preceding road segment is an immediately preceding segment in a direction away from the decision point. A road stretch may therefore be defined by this process, in which additional segment(s) preceding a segment incoming to the decision point are considered if necessary in an iterative approach. This process may be used for any road stretch considered e.g. whether including the given road segment incoming to the decision point, an "opposite" road segment or any other road segment other than the given road segment incoming to the decision point. Where multiple road stretches considered, it is envisaged that there may be some overlap in analysis of road segments forming part of different road stretches with such analysis occurring at least in part in parallel, or each road stretch including any road segments thereof may be considered sequentially.

In accordance with any of its embodiments, the method of the present invention involves analysing digital map data relating to the one or more road stretches to identify one or more traffic signs represented by the digital map data along the one or more road stretches that are relevant to ROW. As set out above, there are various ways in which this may be done, and traffic signs may be identified associated with one or more road segment of a road stretch considered and with any such road stretch considered.

The method may, for example, comprise adding each identified traffic sign relevant to ROW at the decision point to one or more set of identified traffic signs relevant to ROW at the decision point. The signs may be added to such set(s) as they are found or simultaneously. A single set may be used for traffic signs regardless of which stretch they are found on, or different sets may be used in respect of different road stretches. As discussed above, at least in some embodiments, consideration of different stretches may be carried out at different times e.g. in a sequential process. When considering road stretches other than the road stretch including the given road segment it may be desired to distinguish between traffic signs found on an opposite incoming road stretch (where present) and other ones of the incoming road stretches since interpretation of such signs to determine ROW may need to be performed differently. In some embodiments, traffic signs found on all "other" stretches than an opposite stretch are added to a single set.

It will be appreciated that for a particular road stretch considered, traffic signs relevant to ROW may or may not be found. Thus, where multiple road stretches are considered, identifying one or more traffic signs represented by the digital map data along the road stretches may result in one or more traffic sign being identified.

Any suitable method may be used to identify those traffic signs associated with a road stretch that are deemed relevant to ROW. Traffic signs relating to ROW at the decision point in respect of a particular road stretch are for travel of vehicles along the road stretch toward the decision point. Each traffic sign is along the road stretch. The traffic sign is on the road stretch i.e. on a segment thereof. As traffic signs relevant to ROW may be identified along road stretch(es) which do not include the given road segment for which ROW data is required, ROW for the given road segment incoming to the decision point may be determined based on relevant traffic signs in respect of travel along other incoming road segments to the decision point. As discussed below, such relevant traffic signs (relevant to ROW on the particular road stretch) may be indirectly indicative of ROW on the given road segment.

The step of identifying the one or more traffic signs relevant to ROW at the decision point may, (for each road stretch considered in the step of analysing digital map data to identify one or more traffic signs along the road stretch relevant to ROW at the decision point), comprise comparing one or more traffic signs for vehicles travelling toward the decision point found along the road stretch to a predetermined set of traffic sign types deemed relevant to ROW determination. This may be referred to as a set of "relevant traffic signs". The predetermined set of traffic sign types may be set as desired, and may depend upon factors such as local traffic regulations. In some exemplary embodiments the predetermined set of traffic sign types includes signs indicative of the priority of vehicles at the decision point, such as; yield, stop, or priority related signs. Priority related signs may include crossing with priority over minor road, priority road sign etc. The method may comprise adding any traffic signs corresponding to one of the predetermined set of traffic sign types to a set of identified traffic signs relevant to ROW at the decision point. Of course, other techniques to identify relevant traffic signs may be used, and it is not necessary to do this based on comparison with a predetermined set of traffic signs. A relatively broad set of traffic signs may be taken to be relevant to ROW determination, including signs which are definitively indicative of the presence or absence of ROW as well as other less definitive signs which may add to the general context and assist in ROW determination. In other cases, it may be desired to use a smaller set of more definitive signs e.g. stop, priority, yield.

The method further comprises using data indicative of the identified one or more traffic signs relevant to ROW at the decision point to determine data indicative of ROW at the decision point for travel along the given road segment entering the decision point. While the ROW data is determined for travel along the given road segment entering the decision point, it may be based on traffic sign data associated with any of the one or more road stretches considered when analysing the digital map data. Thus, in embodiments at least, traffic sign data associated with one or more road stretches which do not include the given road segment i.e. "other" road stretches are used in determining ROW for travel along the given segment.

The data indicative of ROW at the decision point may indicate whether ROW is present for travel along the given road segment entering the decision point. ROW may or may not be present. As discussed above, an indication as to whether ROW is present may be a simple binary indication e.g. ROW= TRUE or FALSE, or may convey some additional context around the ROW e.g. that there is ROW over certain incoming road segments etc. In preferred embodiments in which the given road segment forms part of a path of a vehicle through the road network and the decision point is along the path, the data indicative of ROW at the decision point indicates whether RO is present for travel by the vehicle along the given road segment of the path incoming to the decision point.

The determination of the data indicative of ROW at the decision point for travel along the given road segment uses data indicative of the identified one or more traffic signs i.e. the determination is based on the data indicative of the one or more identified traffic signs. The determination may be based on such identified traffic signs alone, or may additionally take into account other data. Any suitable algorithm may be used in determining the data indicative of ROW. In some embodiments the determination additionally takes into account a road class and/or a number of lanes of road segments of the one or more road stretches analysed. The road class refers to functional road class. Such information may indirectly be indicative of ROW, for example, with a higher road class or number of lanes indicating that a road segment is more likely to have priority over other road segments, being a more significant road segment. In some embodiments the method further comprises additionally using data indicative of a road class and/or number of lanes of road segments of the one or more road stretches analysed in determining the data indicative of ROW at the decision point.

The step of using the data indicative of the identified one or more traffic signs to determine ROW at the decision point may comprise comparing the one or more identified traffic signs relevant to ROW to a predetermined set of traffic sign types deemed indicative of a vehicle having ROW (a set of "ROW indicating signs"). Thus, in contrast to the step of identifying traffic signs on the one or more road stretches relevant to ROW (which may be in respect of vehicles travelling along road segments other than the given road segment incoming to the decision point), in this step the method involves determining whether any of the identified traffic signs (which may be associated with road segments which do not form part of a road stretch including the given road segment) indicate that a vehicle travelling along the given road segment toward the decision point does or does not have ROW. For example the predetermined set of traffic sign types indicative of a vehicle having ROW may include signs indicative of the vehicles having ROW over other vehicles, such as; priority road, crossing with priority over minor road.

Alternatively or additionally the method may comprise comparing the one or more identified traffic signs relevant to ROW to a predetermined set of traffic sign types deemed indicative of a vehicle not having ROW (a set of "non-ROW indicating signs"). For example, such a set of signs might include yield or stop signs. References to predetermined sets of signs indicating that a vehicle does and does not have ROW do not necessarily imply that separate sets of such signs are used. Comparison to sets of signs of this type which may be taken as definitive as to the presence or absence of ROW along a segment may support obtaining a more simple determination of ROW TRUE or FALSE. Where a more nuanced determination concerning ROW is required, other less definitive traffic signs relative to ROW may additionally be taken into account and/or other factors as discussed above.

It should also be understood that the use of a comparison of found signs to predetermined sets of signs indicative and/or not indicative of ROW is only exemplary, and it will be appreciated that any suitable method may be used to determine ROW for a vehicle based on identified traffic signs.

Where the method comprises comparing the one or more identified traffic signs relevant to ROW to a predetermined set of traffic signs deemed indicative of a vehicle having ROW and/or a predetermined set of traffic signs not indicative of ROW, the method may then further comprise using the results of the comparison to determine the data indicative of ROW for travel along the given road segment. The way in which this is done may depend upon which road stretch the sign indicative of ROW was found. For example, where a sign indicative of a vehicle having ROW is found on a road stretch including the given road segment or an "opposite" road stretch (where present), it may be determined that a vehicle travelling along the road stretch including the given road segment has ROW. Where the sign is found on another incoming road stretch, it may be determined that the converse is the case, since this sign indicates that vehicles travelling along other paths through the decision point have priority.

Similarly, if the traffic signs relevant to ROW found on the road stretch including the given road segment or an "opposite" road stretch (where present) are determined not to include any signs indicative of a vehicle having ROW, it may be determined that a vehicle travelling along the road stretch including the given road segment does not have ROW. Whereas if the traffic signs relevant to ROW found on other incoming road stretches are determined not to include any signs indicative of a vehicle ROW, this may indicate that a vehicle travelling along the road stretch including the given road segment does have ROW.

Whether or not a comparison of found sign(s) to predetermined set(s) of signs are used in determining the data indicative of ROW, when a traffic sign considered to be indicative of a vehicle having ROW (such as forming part of a predetermined set of traffic signs indicative of a vehicle having ROW) is found associated with a road stretch comprising the given road segment or with a road stretch comprising a road segment incoming to the decision point which is in an opposite direction to the road segment for travel along the continuation of the path (i.e. an "opposite road stretch" where present), the method may comprise determining that a vehicle travelling along the given road segment has ROW and/or when a traffic sign considered to be indicative of a vehicle having ROW (for example forming part of a set of predetermined set traffic signs indicative of a vehicle having ROW) is found associated with a road stretch including a road segment entering the decision point other than the given road segment and which does not include a road segment toward the decision point which is for travel in an opposite direction to the road segment for travel along the continuation of the path (i.e. an "opposite road stretch" where present), determining that a vehicle travelling along the given road segment does not have ROW.

Of course, the determination of the data indicative of ROW using the results of the comparison is not limited to considering the significance of identified traffic signs which are indicative of vehicles having ROW. The identified traffic signs relevant to ROW may include signs considered to be indicative of a vehicle not having ROW e.g. yield or stop signs, for example when compared to a predetermined set of traffic signs deemed indictive of a vehicle having ROW and/or such a set of traffic signs indicative of a vehicle not having ROW, where such a comparison is made. Such signs may alone, or in combination with signs positively indicating that a vehicle has ROW, also allow a determination of ROW for travel along the given road segment. For example, where traffic signs indicative of vehicles not having ROW are found associated with all road stretches incoming to the decision point other than road stretches including the given road segment and an opposite road segment if present), it may be inferred that vehicles travelling along a road stretch including the given road segment do indeed have ROW. Conversely a finding of a sign indicative of vehicles not having ROW on a road stretch including the given segment or an opposite segment may indicate that vehicles on a road stretch including the given road segment do not have ROW.

As discussed above, different levels of complexity may be involved in ROW determination based on the relevant traffic signs identified, and this may or may not involve comparison of the signs to predetermined set(s) of signs indicative of a vehicle having or not having ROW, for example depending upon whether a binary result is desired or a more sophisticated indication of ROW. Furthermore, other data may be used in the determination, such that that traffic sign data may be one of a number of types of data used in the determination. In such cases appropriate weighting may be given to the different data used.

The method may comprise using determined ROW data in any suitable manner. For example the method may further comprise providing the determined ROW data to an ADAS or ADS of a or the vehicle. The data may be communicated using ADASIS protocol, which is a standardized protocol that enables transmitting predictive context-aware information in the form of a vehicle horizon. The vehicle is the vehicle to which the path relates where the given road segment forms part of a path for a vehicle through the road network.

This may support use of the data by vehicle systems on repeated occasions as required. The ROW data is preferably stored on board the vehicle.

The techniques described herein may be used to determine ROW information using digital map data where the digital map data does not include any ROW data, or at least does not include ROW data for the given segment.

The method of the present invention involves analysing digital map data relating to the one or more road stretches. The method may extend to the step of obtaining such data. The data may be obtained e.g. by a client device associated with a vehicle that performs the method.

The data may be received over the air (OTA). The data may be received over a data network. It may be transmitted at least partly wirelessly, e.g. by radio. It may be sent over a cellular telecommunications network.

In some preferred embodiments the digital map data is obtained as part of vehicle horizon data relating to a portion of the road network ahead. The vehicle horizon data is in respect of the vehicle to which the path relates where the given road segment forms part of a path for a vehicle.

As used herein, the term "horizon" refers to a driving horizon for use by an ADAS or ADS of a vehicle. The horizon includes a prediction of one or more paths that the vehicle may travel in the immediate future through a portion of a road network or data enabling such a prediction to be made. The horizon data includes digital map data relating to a portion of the road network included in the vehicle horizon. The digital map data includes attribute data for road segments included in the horizon e.g. speed limit data. Determination of a vehicle horizon involves predicting the path or paths that the vehicle may travel in the immediate future, to ensure that the necessary data is transmitted to vehicle subsystems to allow implementation of ADAS or ADS functions by the vehicle subsystems as the vehicle travels. The use of such a horizon can reduce the amount of digital map data to be transmitted. While other arrangements may be envisaged e.g. involving determination of a horizon by a client system associated with the vehicle, typically the vehicle horizon is determined by a server using location data provided by a client system of the vehicle, with the server then providing the relevant horizon data e.g. digital map data to the client system for use by the vehicle subsystems.

WO 2014/068094 A1 by TomTom International B.V. discloses using the current location of a vehicle and digital map data to determine a "horizon", containing a collection of road segments, corresponding to paths within a predetermined distance or radius ahead of the vehicle, which the vehicle might traverse in the immediate future. Attribute data, such as a speed limit associated with a road segment, may be transmitted to an ADS or ADAS of a vehicle, for paths contained in the horizon.

It has been recognised that digital map data to support implementation of the methods described herein may be transmitted as part of vehicle horizon data relating to a portion of the road network ahead of a or the vehicle.

It may be necessary to enhance vehicle horizon data to support the methods described herein. The digital map data must comprise traffic sign data.

A vehicle horizon will deliver a vehicle-centric view of the map. This means that map data relating to roads entering decision points in directions opposite to the vehicle's direction of travel would not usually be included, or at least usually not all attributes would be included. To support consideration of road stretches incoming to the decision point other than the road stretch including the given road segment, the vehicle horizon data will therefore need to be enhanced to additionally consider digital map data (comprising traffic sign data) for such additional road stretches. As mentioned above, the outcome of the ROW determination may be stored as part of the vehicle horizon. Thus the vehicle horizon may additionally be enhanced to include such data.

In accordance with a further aspect of the invention there is provided a method for sending digital map data to a client apparatus associated with the vehicle for use in the method of the present invention in any of its aspects or embodiments, the method comprising extracting the digital map data from a digital map representative of the road network, the method comprising:
identifying a current road segment of the vehicle;
determining a probable path of the vehicle from the current position toward a decision point in the direction of travel,
determining a road stretch incoming to the decision point forming part of the probable path;
determining a continuation of the probable path of the vehicle after traversing the decision point;
determining a road stretch outgoing from the decision point forming part of the continuation of the probable path;
extracting digital map data indicative of the road stretches incoming to the decision point and outgoing from the decision point forming part of the probable path and the continuation thereof;
identifying one or more further road stretches incoming to the decision point;
extracting digital map data indicative of each further road stretch;
and sending the extracted data to the client device;
wherein the extracted digital map data includes road sign data associated with each road stretch.

The present invention in accordance with this further aspect may include any of the features described in reference to other aspects or embodiments of the invention to the extent it is not mutually inconsistent therewith. The further road stretches may include an "opposite" road stretch as defined herein.

The methods disclosed herein are computer-implemented.

Any of the processing steps disclosed herein may be performed by software executing on one or more processors, or by hardware, or by a combination of software and hardware. Information may be communicated by wired and/or wireless channels.

The methods in accordance with the technology described herein may be implemented at least partially using software e.g. computer programs. It will thus be seen that when viewed from further embodiments the technology described herein comprises computer software specifically adapted to carry out the methods herein described when installed on a data processor, a computer program element comprising computer software code portions for performing the methods herein described when the program element is run on a data processor, and a computer program comprising code adapted to perform all the steps of a method or of the methods herein described when the program is run on a data processor. The data processor may be a microprocessor system, a programmable FPGA (field programmable gate array), etc..

The technology described herein also extends to a computer software carrier comprising such software which when used to operate a graphics processor, renderer or microprocessor system comprising a data processor causes in conjunction with the data processor the processor, renderer or system to carry out the steps of the methods of the technology described herein. Such a computer software carrier could be a physical storage medium such as a ROM chip, CD ROM, RAM, flash memory, or disk, or could be a signal such as an electronic signal over wires, an optical signal or a radio signal such as to a satellite or the like.

It will further be appreciated that not all steps of the methods of the technology described herein need be carried out by computer software and thus from a further broad embodiment the technology described herein comprises computer software and such software installed on a computer software carrier for carrying out at least one of the steps of the methods set out herein.

The technology described herein may accordingly suitably be embodied as a computer program product for use with a computer system. Such an implementation may comprise a series of computer readable instructions either fixed on a tangible, non-transitory medium, such as a computer readable medium, for example, diskette, CD-ROM, ROM, RAM, flash memory, or hard disk. It could also comprise a series of computer readable instructions transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

It will this be seen that, when viewed from a further aspect, the present invention extends to computer software comprising instructions which, when executed on a computer processing system, causes the computer processing system to perform a method in accordance with any of the aspects or embodiments of the invention described herein. The computer software disclosed herein may be on a transitory or a non-transitory computer-readable medium.

In accordance with a further aspect there is thus provided computer software comprising instructions which, when executed on a computer processing system, cause the computer processing system to perform a method of determining Right of Way (ROW) data in respect of travel along a given road segment entering a decision point of a road network in a geographic area covered by a digital map, the method comprising;
analysing digital map data relating to one or more road stretches entering the decision point to identify one or more traffic signs represented by the digital map data along the one or more road stretches that are relevant to ROW at the decision point, each road stretch comprising at least a respective road segment entering the decision point;
and using data indicative of the identified one or more relevant traffic signs to determine data indicative of ROW at the decision point for travel along the given road segment entering the decision point.

The present invention in accordance with this further aspect may include any of the features described in reference to other aspects or embodiments of the invention to the extent it is not mutually inconsistent therewith.

In accordance with a further aspect of the invention there is provided a computer processing system for processing digital map data, wherein the computer processing system is configured to perform a method in accordance with any of the aspects or embodiments described herein.

Thus, in accordance with a further aspect there is provided a computer processing system for determining Right of Way (ROW) data in respect of travel along a given road segment entering a decision point of a road network in a geographic area covered by a digital map, wherein the computer processing system is configured to perform a method comprising the steps of;
analysing digital map data relating to one or more road stretches entering the decision point to identify one or more traffic signs represented by the digital map data along the one or more road stretches that are relevant to ROW at the decision point, each road stretch comprising at least a respective road segment entering the decision point;
and using data indicative of the identified one or more relevant traffic signs to determine data indicative of ROW at the decision point for travel along the given road segment entering the decision point.

The present invention in accordance with this further aspect may include any of the features described in reference to other aspects or embodiments of the invention to the extent it is not mutually inconsistent therewith.

The present invention in accordance with any of its further aspects or embodiments may include any of the features described in reference to other aspects or embodiments of the invention to the extent it is not mutually inconsistent therewith.

As discussed earlier, the methods of the present invention in any of its aspects or embodiments may be implemented by a client device. However, it is envisaged that at least some of the steps may alternatively be implemented by a server. At least some of the steps may be carried out by a client device and/or at least some of the steps by a server. Furthermore, the client device need not necessarily be associated with a vehicle.

It should be noted that the phrase 'associated therewith' in relation to data should not be interpreted to require any particular restriction on data storage locations. The phrase only requires that the features are identifiably related to one another. Therefore association may for example be achieved by means of a reference to a side file, potentially located in a remote server.

While the methods herein have been described in relation to a decision point of the road network, the same methods may be applied to any further decision points e.g. along a path for consideration.

It is also noted that the techniques described herein may correspondingly be extended to consider lane level ROW at a decision point.

Features of any aspect or embodiment described herein may, wherever appropriate, be applied to any other aspect or embodiment described herein. Where reference is made to different embodiments or sets of embodiments, it should be understood that these are not necessarily distinct but may overlap.

Advantages of these embodiments are set out hereafter, and further details and features of each of these embodiments are defined in the accompanying dependent claims and elsewhere in the following detailed description.

### BRIEF DESCRIPTION OF THE DRAWINGS

Certain preferred embodiments of the invention will now be described, by way of example only, with reference to the accompanying drawings, in which:
Figure 1 illustrates a representation of a portion of a road network by a digital map;
Figure 2 is a flow chart illustrating the general steps of a method in accordance with one embodiment of the invention;
Figure 3 is a flow chart illustrating the steps involved in one exemplary method which may be used in determining ROW data for a given segment incoming to a decision point in accordance with the invention;
Figure 4 is a flow chart illustrating the steps involved in one exemplary method which may be used in determining ROW data for a segment incoming to a decision point in accordance with the invention, and using a so-called "look back" process;
Figure 5 is a flow chart illustrating one example of how the principles of the method of Figure 4 may be applied to determining ROW for a given segment incoming to a decision point, where an opposite segment and other incoming segments are also present, involving considering the given segment, opposite segment and other incoming segments in a sequential manner;
Figure 6 is a flow chart summarising another example of how the principles of the method of Figure 4 may be applied to determining ROW for a given segment incoming to a decision point, where an opposite segment and other incoming segments are also present, involving considering all incoming segments in an unconditional manner;
and Figure 7 is a road sign illustrating that vehicles have priority used in explaining certain features of the invention

### DETAILED DESCRIPTION

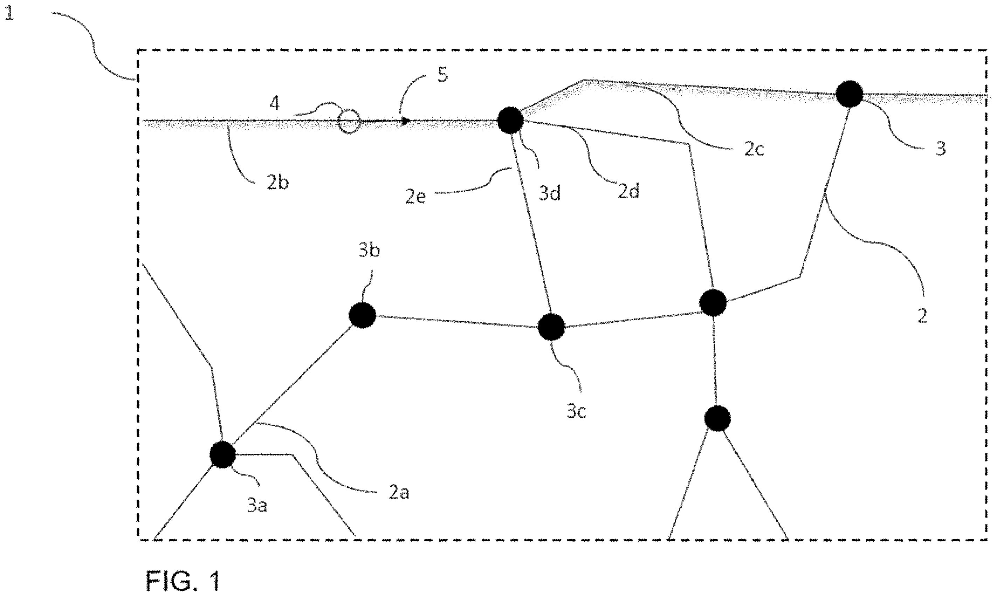

Figure 1 shows part of a digital map of a road network, covering a map area 1, where the map is represented as a graph. The map data for the map area 1 comprises arcs that represent road segments 2 of the digital map, and that connect nodes representing connections 3 of the digital map. For example, the road segment 2a links connections 3a and 3b. The connections 3 of the digital map may represent exits, end points or decision points of the road network, such as road junctions, or may represent locations at which an attribute of the road changes, such as a change of speed limit.

A road segment 2 may be associated with attributes that describe information such as the average speed of travel, legal speed limit, direction of travel, length of a road segment, average turn time for a junction, shape of a road segment (e.g. a polyline comprising a sequence of geographic coordinates along the road segment), or number of lanes. To provide Intelligent Speed Assist (ISA) functionality, each road segment 2 (and optionally connection 3) may comprise a speed limit attribute that describes the legal speed limit for that road segment or connection.

The road segments 2 may be directed road segments which may be identified by unique path segment identifiers. The unique road segment identifier may be formed using geographical coordinates of the pair of connections at either end of a road segment in the order of travel. For example, one direction of traffic flow for road segment 2a may be represented by a start connection 3a and an end connection 3b, while traffic flow in the opposite direction for the same road segment 2a may be represented by the ordered pair of connections 3b and 3a.

The principles of the present invention will be illustrated by particular reference to the case in which directed segments are used. For ease of illustration, it will be noted that Figure 1 only illustrates a single road segment linking each pair of connections. However the segment shown in the Figure can be seen as representative of the presence of a pair of road segments extending between the connections for travel in each direction (where travel in both directions is possible), with only one segment shown for clarity. Thus, it will be understood for the purposes of the discussion below, that the segments of Figures 1 are directed segments, and where applicable there will be a pair of such segments present in the locations indicated by 2b, 2c, 2d, 2e etc. representing each driving direction.

As mentioned above, in general digital maps store data in a network model, i.e. as a set of directed or undirected arcs (segments) and connections between them (nodes). There are various ways of storing map data. The methods of the present invention are described with particular reference to the case in which directed segments are used in the digital map. In this case, two such segments would exist between a pair of nodes where driving is possible in each direction, one per driving direction. However, the methods of the present invention are also applicable to other types of map convention, for example using undirected segments, in which a single road segment of the map is used to represent travel along a road segment of the road network in both driving directions, using directed attributes to specify the attributes that apply to a particular direction of travel. For example, if the segment is for one-way driving, an attribute would indicate a driving direction being prohibited.

The digital map represents a portion of a road network in the area covered by the map. The road segments 2 of the digital map represent road segments of the real world road network. At least some of the connections of the digital map represent decision points of the real world road network.

Some of the nodes of the digital map e.g. 3b in Figure 1 may be seen as "artificial" nodes, which represent artificial connections between road segments i.e. which do not correspond to decision points in the real world road network. Such nodes are included in the digital map for map making reasons e.g. to enable a change in attribute of a road to be represented. At these nodes, there will be only one possible outgoing road segment for a given incoming road segment. In other words, the artificial nodes are between only two road segments.

The present invention relates to a computer implemented method for determining ROW in respect of a given road segment entering a decision point of a road network. At such real world decision points there will be two or more possible outgoing road segments for a given incoming road segment. The nodes representing such real world decision points are between three or more road segments. The nodes 3a, 3c and 3d in Figure 1, and indeed each of the nodes other than 3b, represent such real world decision points in the digital map. The decision point is between two or more drivable road segments i.e. segments which may be driven by a motorized vehicle (rather than pedestrian/bicycle paths).

The decision point may be any form of intersection, roundabout, junction, crossing, divergence of a path, etc. The term "decision point" as used herein also encompasses a plural junction where individual junctions are close together. In these cases road segments emanating from each junction may be considered to approximately emanate from a single decision point, and may be treated as such.

Figure 1 shows a current location 4 and a direction of travel 5 of a vehicle. The vehicle may be any type of vehicle e.g. truck, car, public transport vehicle etc. The current position and direction of travel may be obtained using probe data obtained from sensors (e.g. a GNSS sensor) on the vehicle and map matching the location to the digital map in any suitable manner. Examples of map-matching processes that may be used are described in WO 2018/019984 A1 and WO 2018/019989 A1, both by TomTom Navigation B.V.

Some preferred embodiments of the invention will be illustrated by reference to decision point 3d. Decision point 3d is the next upcoming decision point to be encountered by the vehicle as it travels through the road network. The vehicle is travelling along road segment 2b which is an incoming road segment to the decision point 3d. The decision point 3d has three possible outgoing road segments, 2c, 2d and 2e. As explained above, it is to be assumed that there is a pair of directed segments in the positions illustrated by segments 2c, 2d and 2e etc, representative of travel in each driving direction (assuming bi-directional travel is possible).

In this exemplary embodiment, the vehicle is travelling along a path (shaded) through the road network. This path includes road segment 2b incoming to the decision point 3d and continues with outgoing road segment 2c before reaching decision point 3 and continuing on the other side of that decision point as shown.

The path may be any predetermined path.

The path may be a precalculated route of the vehicle, e.g. a calculated route between an origin and destination. A calculated route may be calculated by any navigation system, whether forming part of an ADAS or ADS of the vehicle, or otherwise e.g. as part of a server. For example a route may be calculated by any suitable navigation app, whether run on a vehicle system or a device such as a smartphone or standalone satellite navigation device, whether located in the vehicle or not.

While in embodiments in which a calculated route is determined the techniques of the present invention may advantageously be applied to determining ROW in respect of an incoming road segment to a decision point along the calculated route, the present invention may also be applied to determining ROW for travel along an incoming road segment to any decision point of interest in the road network, not necessarily along the calculated route. For example, the decision point may be along another path determined as part of a route calculation process e.g. an alternative route, or a candidate route used in determining the calculated route.

In other embodiments the path may be a most probable path (MPP) of the vehicle. The MPP may be a MPP of a vehicle horizon. As used herein, the term "horizon" refers to a driving horizon for use by an ADAS or ADS of a vehicle. The horizon includes a prediction of one or more paths that the vehicle may travel in the immediate future through a portion of a road network or data enabling such a prediction to be made. Determination of a vehicle horizon involves predicting the path or paths that the vehicle may travel in the immediate future, to ensure that the necessary data is transmitted to vehicle subsystems to allow implementation of ADAS or ADS functions by the vehicle subsystems as the vehicle travels. In some cases in which a route is calculated, an MPP will follow the calculated route, and thus where there is a calculated route, the path may be a calculated route that also defines an MPP. While other arrangements may be envisaged e.g. involving determination of a horizon by a client system associated with the vehicle, typically the vehicle horizon is determined by a server using location data provided by a client system of the vehicle, with the server then providing the relevant horizon data e.g. digital map data to the client system for use by the vehicle subsystems.

Vehicle horizons are described, for example in WO 2014/068094 A1 by TomTom International B.V., which discloses using the current location of a vehicle and digital map data to determine a "horizon", containing a collection of road segments, corresponding to paths within a predetermined distance or radius ahead of the vehicle, which the vehicle might traverse in the immediate future. Attribute data, such as a speed limit associated with a road segment, may be transmitted to an ADS or ADAS of the vehicle, for paths contained in the horizon. The use of such a horizon can reduce the amount of digital map data to be transmitted.

While in embodiments in which an MPP is determined the techniques of the present invention may advantageously be applied to determining ROW in respect of an incoming road segment to a decision point along the MPP, the present invention may also be applied to determining ROW for travel along an incoming road segment to any decision point of interest in the road network, not necessarily along the MPP. For example, the decision point may be along another path determined as part of the vehicle horizon generating process e.g. a second or lower order most probable path.

While the present invention will be described in accordance with embodiments in which ROW data is determined for a vehicle currently travelling along a path through the road network (whether a calculated route, MPP or otherwise), it will be appreciated that it may be applied in the context of determining ROW information for travel along any incoming segment to a decision point of interest in the road network, whether or not this forms part of a path. This may be useful in route optimization e.g. in determining an energy or time efficient route. Determining ROW data may assist in subsequently generating a calculated route, MPP etc. For example, paths may be explored in order to determine a calculated route, MPP etc. taking into account the ROW data.

The exemplary embodiment of the invention will be in the context of determining ROW for a vehicle at the decision point for travel along incoming road segment 2b, and is performed while the vehicle is travelling along the route by a client device of the vehicle. However, other embodiments may be envisaged. For example, the decision point may not be the next decision point to be encountered, but may be a decision point further along the path of the vehicle. It may be helpful to determine ROW for all decision points along a path (of whatever form) to support route optimization. Whether or not a vehicle has priority at a decision point may affect energy efficiency of that portion of the path e.g. if the vehicle is likely to need to stop and then accelerate away again, and/or travel time e.g. based on whether the vehicle is likely to need to stop and give way etc. Of course, similar benefits may apply where the decision point does not form part of a path through the road network, such as an MPP and/or calculated route e.g. where the method is performed as part of the determination of a route or MPP.

Even where the decision point forms part of a path of a vehicle, the invention may be used in situations other than when the vehicle is travelling along the path. For example, once a path is determined e.g. a calculated route or MPP, the present invention may be applied to determine ROW information for any decision point(s) along the path prior to travel by the vehicle along the path. This may again assist in functioning of ADS or ADAS systems, route optimization etc.

In the exemplary embodiments of the invention, the method is implemented by a client device on board the vehicle. The method is implemented at run time from digital map data available to the client device. Such a client device may be integrated with a vehicle or otherwise located on board a vehicle e.g. being a smartphone of a driver etc. The method may be implemented by a client device running a suitable navigation application. However, while on board implementation may be particularly advantageous, other arrangements are possible. For example, at least some of the steps of the method implemented by a server and/or by a client device which need not necessarily be located on board a vehicle.

It will be appreciated that the ability to efficiently determine ROW data using a computer based system for travel along a given incoming road segment to a decision point of a road network is of great utility. ROW information relates to whether a vehicle has priority over other road users to proceed first at a decision point. ROW may be indicated to a driver using explicit traffic signs, such as stop, yield, priority road etc, or may be implicit. Implicit rules may be specific to particular countries based on local regulations e.g. governing priority at a roundabout, or other conventions. For example, it may be considered that vehicles on gravel/dirt roads must yield to traffic on paved roads. The present invention provides methods and systems enabling ROW to be determined using digital map data.

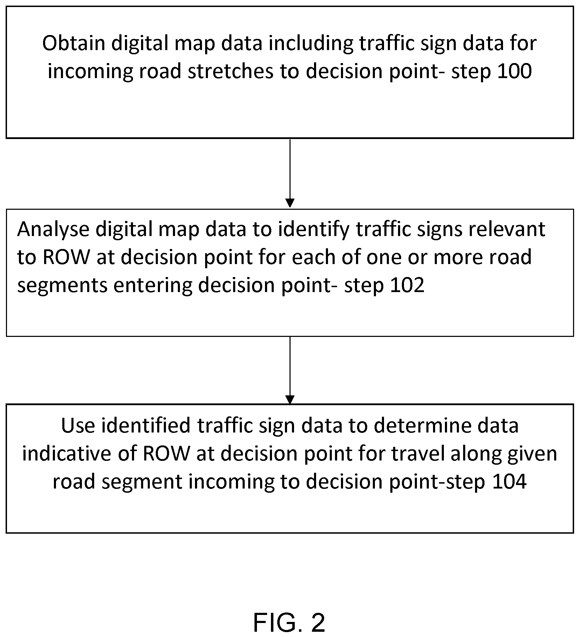

Returning to Figure 1, some exemplary embodiments of the invention will be described. It will be appreciated that the same principles in terms of determining ROW data using traffic sign data associated with incoming road segments to the decision point may be carried out regardless of whether the incoming road segment for which ROW data is required forms part of a path or specifically an MPP as in the exemplary embodiment illustrated. Reference will also be made to Figure 2, which is a flow chart setting out steps of the exemplary method. The steps of the method may be implemented using a suitable algorithm e.g. run on the client device of the vehicle.

The method enables ROW data for travel along the incoming road segment 2b to be determined. This may be referred to as the "given incoming road segment" i.e. the segment for which ROW data is required.

In step 100 of Figure 2, the method comprises obtaining digital map data including traffic sign data for incoming road segments to the decision point. The incoming road segments to the decision points are those segments terminating at the decision point and are for traffic flow toward the decision point.

In preferred implementations, such digital map data is obtained for all incoming road segments to the decision point. However, as set out below, depending which incoming road segments are considered in determining ROW data, in some implementations only some incoming road segments may be considered e.g. just the given incoming road segment for which ROW data is required. In some embodiments the method may also involve considering digital map data relating to preceding road segment(s) to some or all of the incoming road segments. In such implementations, digital map data including traffic sign data for additional road segments preceding the incoming road segments at the decision point would also be needed.

Returning to Figure 1, in exemplary embodiments the client device of the vehicle has access to digital map data relating to at least the upcoming parts of the road network in the vicinity of the path being travelled. This includes digital map data including traffic sign data relating to the decision point 3d, the incoming and outgoing road segments forming part of the path, and also relating to other incoming road segments to the decision point to support determining ROW in accordance with the embodiments described herein. This data may advantageously be provided by enhancing vehicle horizon data provided to vehicle systems.

As discussed above, typically a vehicle horizon is determined for the vehicle based on its current position and direction of travel, and digital map data is provided to vehicle systems in respect of this vehicle horizon. The horizon data is typically provided in respect of an MPP for the vehicle and potentially other possible paths. Digital map data e.g. relating to road segment attributes along the MPP or any other paths is provided to the vehicle systems to support ADAS or ADS functionality.

A horizon is a simplification built on the network model provided by the digital map. It delivers a vehicle-centric view of the map by extracting map data which belongs to predicted trajectories which this vehicle can follow. In this simplified view, the trajectories of other road users are not constructed, and thus map data relating to such other trajectories is not delivered. This is consistent with the purpose of the horizon being to support ADS or ADAS functionality of the vehicle as it travels along a path through the network while avoiding unnecessarily transmitting digital map data (which may undesirably add to OTA delivery requirements, computation and storage demands). In this context, providing data relating to segments incoming to the decision point is generally not done.

Thus, while the digital map data provided as part of a vehicle horizon may include digital map data relating to the MPP leading up to the decision point 3d and the continuation of that MPP along road segment 2c after traversing decision point 3d, in order to support ROW determination in accordance with preferred embodiments of the invention, additional digital map data is provided to the vehicle systems.

This additional map data includes traffic sign data relating not only to the MPP and its continuation after decision point 3d, but also such data relating to all other drivable incoming road segments to decision point 3d. While not explicitly shown in Figure 1, as explained above, where traffic flow in either direction along the road segment of the road network represented by the segment is possible, each segment 2c, 2d, 2e etc. may be seen as illustrating a pair of directed segments, one in respect of each driving direction i.e. an incoming and outgoing road segment at the decision point 3d. Thus at decision point 3d, assuming travel in either direction is possible, there will be pairs of incoming and outgoing segments where each of segments 2c, 2d and 2e are illustrated. For ease, reference may be made to incoming or outgoing segments 2c, 2d, 2e etc below at decision point 3d, and should be understood to refer to the applicable one of the pair of segments represented by each of 2c, 2d, 2e etc. for the relevant driving direction. (In an alternative case, if the segments of the map are undirected, information relating to the different directions of travel along a segment will be conveyed by directed attributes associated with the segments of the digital map. Thus the relevant attributes for travel along the segment toward or away from a node will then be considered.)

Assuming directed segments, the outgoing segment represented by road segment 2c forms a continuation of the MPP for the vehicle after passing through decision point 3d. An incoming road segment along the path illustrated by segment 2c also exists in an opposite direction toward the decision point 3d. This is an incoming road segment to the decision point for travel in an opposite direction to the continuation road segment of the MPP, or, in short, the "opposite segment".

For reasons which will be set out in more detail below, in preferred embodiments at least, it is desirable to include digital map data including traffic sign data relating to such an opposite segment. Including traffic sign data relating to other incoming road segments to the decision point may enable ROW to be determined to a greater degree of confidence and/or in situations where insufficient traffic sign data is present associated with the incoming road segment for which ROW data is required to enable ROW to be determined for that segment, at least to a desired level of confidence. The additional data provides a fuller context of the decision point, including, for example traffic signs pointing in directions opposite those of the direction of travel of the vehicle.

The vehicle horizon may advantageously be enhanced to include the additional data for use in the methods of the present invention. For example, other road segments entering the decision point may be inspected to identify traffic sign data associated therewith, and such data transmitted to the vehicle systems. A search against driving direction from the perspective of the vehicle may be performed to identify such data. Such additional data would not usually form part of the vehicle horizon as the vehicle horizon is concerned with data relevant to travel of the vehicle in the driving direction along its particular trajectory.

While in preferred embodiments the vehicle horizon data is enhanced to provide the necessary data to support implementation of ROW determination in accordance with embodiments of the invention, it will be appreciated that the relevant data i.e. digital map data comprising traffic sign data for relevant road segments to support a desired implementation of the invention, may be obtained in other manners. It will also be understood that where the path being traversed by the vehicle is not an MPP, it will still have a continuation road segment on the other side of the decision point, and an "opposite segment" may be defined with respect to the continuation of the path in the same manner as where the path is an MPP. In embodiments where the given incoming road segment for which ROW data is required does not form part of a path, the digital map data comprising traffic sign data for the relevant road segments for consideration i.e. other incoming road segments to the decision point may be obtained in any suitable manner.

Referring to Figure 2, in step 102 the method involves analysing the digital map data to identify traffic signs relevant to ROW at the decision point found on one or more road stretches entering the decision point 3d. Each road stretch includes a respective road segment entering the decision point. A traffic sign relevant to ROW at the decision point for a particular incoming road stretch relates to whether a vehicle travelling along the incoming road stretch to the decision point has ROW at the decision point.

Reference is made to analysing digital map data relating to a road stretch including a particular road segment incoming to the decision point. Digital map data relating to at least the road segment incoming to the decision point for each stretch is considered. The road stretch may correspond to such a road segment. However, in some situations e.g. if no relevant traffic sign data is found on that road segment, preceding road segment(s) may additionally be considered. Thus, it is most appropriate to refer to analysing digital map data relating to a road stretch comprising at least a road segment entering the decision point.

According to step 104 of Figure 2, identified traffic sign data is used to determine data indicative of ROW at the decision point for travel along the given road segment incoming to the decision point.

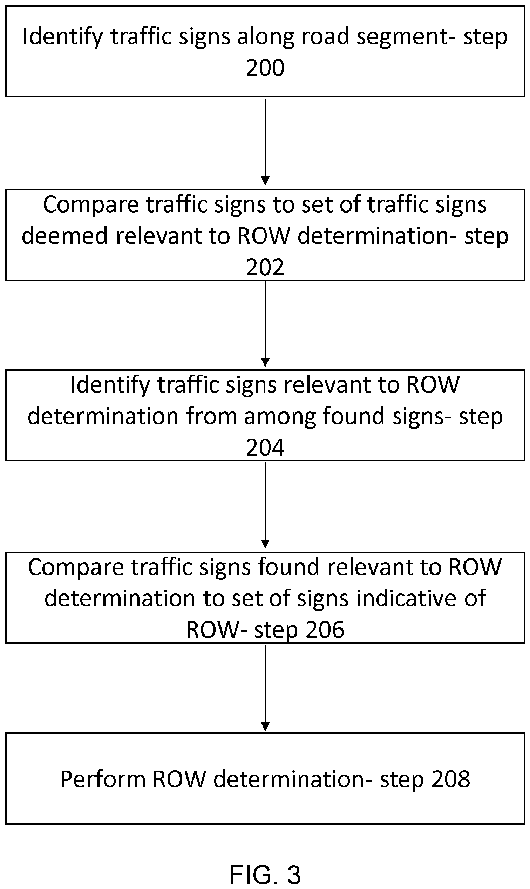

By reference additionally to the flow chart of Figure 3, the principles of this process will be described in more detail by reference to a road stretch including the given road segment 2b incoming to the decision point 3d on which the current position of the vehicle 4 lies. However, as set out in more detail below, other ones of the road stretches entering the decision point i.e. including any one or ones of incoming road segments 2c, 2d or 2e may alternatively, or preferably additionally, be considered.

The road segment 2b incoming to the decision point is considered first. In step 200 traffic signs along this road segment are identified. It is then identified whether any of these traffic signs are relevant to ROW at the decision point. According to step 202 this involves comparing any traffic signs found to a predetermined set of traffic signs deemed relevant to ROW determination. In step 204 those traffic signs relevant to ROW determination from among the found signs are identified.

The set of traffic signs deemed relevant to ROW determination may be set as desired, and may depend e.g. on local regulations or other factors. For example, where multiple incoming road segments are considered as in preferred embodiments described below, the set of traffic signs may include signs which taken alone may be less definitive, but which still contribute to the overall context supporting ROW determination which is based on traffic signs found on multiple incoming road segments. In one example, relevant signs may be taken as yield, stop, priority road, crossing with priority over minor road. Thus, when determining whether the vehicle has ROW at the decision point when travelling along the road segment 2b, road signs are considered which not only may positively indicate ROW i.e. priority signs, but also those that indicate there may not be priority e.g. yield, stop, supporting determination of data indicating that the vehicle does not have ROW at the decision point.

In this way, a set of traffic signs deemed relevant to ROW determination associated with the incoming road segment may be found following step 204.

This process of considering whether there are relevant traffic signs associated with the given incoming road segment to the decision point for which ROW information is required may be referred to as "look here".

In step 206, relevant traffic signs found in step 204 are compared to a set of signs deemed indicative of a vehicle travelling along the segment having ROW. Again, such a predetermined set of signs may be set as desired. A set of signs indicative of a vehicle having ROW may, for example, include priority road, crossing with priority over minor road These signs would indicate that a vehicle travelling along the road segment does have priority at the decision point.

Alternatively or additionally, step 206 may involve comparing relevant signs found in step 204 to a set of signs deemed indicative of a vehicle travelling along the segment not having ROW. Such signs may include stop or yield signs, for example. It will be appreciated that the presence of such sign(s) may enable a determination to be made that the vehicle does not have ROW. The presence of a stop or yield sign will implicitly indicate that a vehicle does not have priority and thus ROW.

The set(s) of signs used in step 204 will thus include signs providing a more definitive indication that a vehicle does or does not have ROW as appropriate, while those in the set of traffic signs deemed relevant to ROW determination in step 204 may include any signs relevant to ROW determination, including those which may indicate there is or is not ROW, or any providing a less definitive indication. Any ROW relevant signs found in step 204 may be useful in more complex methods of determining ROW even if they do not provide a definitive indication taken alone.

The use of predetermined signs indicative of ROW and/or not indicative of ROW is only exemplary, and it will be appreciated that other methods of determining ROW in respect of travel along the given segment based on found signs may be used which may not involve the use of such predetermined set(s) of signs.

In step 208, where possible, a determination as to whether ROW has been found based on step 206 is made. For example, this may involve finding the vehicle to have ROW at the decision point when travelling along the given road segment where a sign from the set of predetermined signs indicative of ROW has been found thereon.

Of course, in some cases, it may not be possible to make a determination as to ROW along the given incoming segment e.g. where relevant traffic signs indicative of ROW have not been found. In such cases, additional road segments may need to be considered as set out below. These may include preceding road segment(s) along a road stretch including the given road segment along which the vehicle is travelling i.e. along the travelled path and/or other incoming road segments to the decision point, and/or preceding road segment(s) to those other incoming road segments.

The method described with respect to Figure 3 thus represents a simple case for the purposes of illustration, considering only traffic signs associated with the given incoming road segment at the decision point along the path being travelled by the vehicle ("look here"). This may be performed as a first step, to see whether a determination of ROW is possible, before going on to consider other road segments if necessary, or it may be the case from the outset that other road segments are to be considered. For example, in more complex methods, other incoming road segments to the decision point are considered and/or preceding road segments along a road stretch including the given road segment along which the vehicle is travelling. This may provide greater context to the ROW determination and allow such a determination to be made with greater confidence. Exemplary methods using various of these techniques are described below.

In some situations, it may be that no traffic signs relevant to ROW determination are found on the given incoming road segment. In this case, one or more immediately preceding road segments may be considered. This process of considering preceding road segments may be referred to as "look back". In this example, where the incoming road segment to the decision point is along the path of the vehicle, the preceding road segment(s) will be preceding road segments along the path of the vehicle. In this case, a road stretch comprising the given road segment and one or more additional road segment or portion thereof will be considered when analysing the digital map data to identify relevant traffic signs. This step may thus more generally be referred to as being performed in relation to a road stretch comprising at least the given road segment.

The digital map data relating to the road segment immediately preceding the given incoming road segment will be considered in the same manner as described in relation to the given road segment incoming to the decision point, to identify relevant traffic signs for ROW determination e.g. by comparison to a set of relevant traffic signs. This would involve steps 200, 202 and 204 previously described. The process may continue in an iterative manner, looking back over the next immediately preceding road segment.

A suitable stopping condition should be set for this process. In one example, iteration through preceding road segments may continue until one of the following conditions is met;
a decision point between N drivable road segments (N>2) is reached;
a relevant traffic sign is found;
or a predetermined search distance is reached.

The extent to which look back is performed, and the criteria used to determine the end point of this process may be set as desired e.g. based on processing constraints etc. It will be noted that a two-way intersection of road segments would not be considered as a stopping condition since, as discussed above, these do not represent real world decision points. Any intersection with only non-drivable roads e.g. pedestrian/bicycle paths is also ignored as a stopping condition.

Any relevant traffic signs found during this "look back" process may be used in a ROW determination by comparison to the predetermined set of signs indicative of ROW (and/or not indicative of ROW) as described in relation to steps 206 and 208 of Figure 3.

An algorithm may be configured to perform the "look here" process, and, if it is possible to make a determination as to ROW for the given road segment based thereon i.e. at step 208, then to output such a determination.

An algorithm may be set up to perform "look here", and, if this does not provide a determination as to ROW, to then move on to "look back". However, other options are possible.

The same process described with respect to 200-208 may be applied to any other incoming road segment to the decision point that is considered. This may be referred to as "look around". The result will be a set of relevant traffic signs found on the respective incoming road segment. This "look around" process may be performed if no conclusion can be reached based on "look here" and "look back" in relation to the given incoming road segment, or it may be that such a process is performed anyway regardless of the outcome of these processes to provide greater context to the determination. As with the given incoming road segment, where necessary "look back" may be performed in relation to these other incoming road segments to take into account preceding road segments where a road segment incoming to the decision point itself does not have relevant traffic sign data. In such cases a road stretch comprising the relevant incoming road segment is effectively considered.

Referring again to the example of Figure 1, at the decision point 3d, road segments 2c, 2d and 2e provide "other" incoming segments to the decision point 3d in comparison to the given road segment 2b for which ROW information is to be determined.

The path being travelled by the vehicle includes a continuation along segment 2c on the other side of the decision point. The "other" incoming segments thus include a road segment that is an opposite of the continuation road segment i.e. that is along road segment 2c but in an opposite direction to the continuation of the path. This segment will be referred to as the "opposite road segment" for ease of reference.

A process as described with respect to Figure 3 may be performed in relation to each "other" road segment incoming to the decision point, in the same way that it is performed for the given incoming road segment in the Figure 3 example. The difference may reside in how the results of comparing any relevant traffic signs to a predetermined set of signs indicative of ROW (step 206) is used to determine ROW (step 208). Generally if it is found that there is right of way for travel toward the decision point along one of the "other" road segments, this may be taken as indicative that there is not ROW for vehicles travelling along the given incoming segment.

However, where the vehicle is travelling along a path that has a continuation on the other side of the decision point, it has been found that it is useful to treat this "opposite road segment" as a special case separate from a remainder of the "other" incoming road segments when determining ROW along the given road segment 2b in a direction toward the decision point. This is because the conclusions that may be drawn regarding ROW on the given road segment based on relevant traffic signs found on the opposite road segment will differ than those drawn when the same traffic sign is found on one of the other incoming road segments.

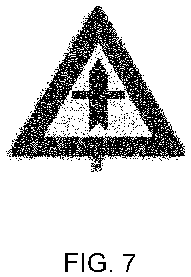

By way of example, consider the case in which the decision point is an intersection between a priority road and non-priority road, and no relevant traffic sign is present on the given incoming road segment 2b. If the traffic sign shown in Figure 7 is found on the opposite road segment, it may be concluded that the given road segment (and also the continuation path road segment) have right of way:
However, if the same sign is found on another incoming road segment other than the given road segment i.e. which is not the incoming given road segment or the opposite road segment, the opposite conclusion would follow, since that other incoming road segment would then have priority over other incoming road segments, implying that the given road segment does not have priority at the decision point. In other words, typically while traffic signs indicating that a vehicle travelling along one of the "other" road segments has ROW may imply that the vehicle travelling along the given incoming road segment along its path does not have ROW at the junction, i.e. there is a converse finding, where traffic signs indicate that vehicles do have priority when travelling along the opposite road segment, the implication is instead that the vehicle travelling along the given incoming road segment does have ROW.

When considering "other" road segments in the "look around" process, it may be helpful to consider the "opposite road segment" independently of the other segments. Where multiple "other" incoming road segments exist, any one or ones of these may be considered, and where multiple ones are considered, the processes involved in analysing digital map data to obtain traffic sign data may be performed separately for each other incoming road segment e.g. sequentially or at least in part as parallel processes. Any traffic signs found may then be considered together in determining ROW in respect of the given road segment.

Advantageously all drivable "other" incoming road segments are considered. To improve confidence in the results of ROW determination it may be desirable to consider all "other" road segments and only take a resulting ROW determination derived from consideration of traffic signs found on road stretches including the "other" road segments as valid where these are consistent. However other options may also be used.

While the examples above have referred to determining ROW for the given segment based on finding signs indicative of ROW on a stretch including the given segment or an opposite segment, or determining that ROW is not present for the given segment when a sign indicative of ROW is found on a stretch including an "other" incoming segment that is not the given segment or opposite segment, the method may alternatively or additionally make a determination using found signs that are indicative of ROW not being present e.g. stop or yield. For example, if such a sign is found on a stretch including the given segment or opposite segment, it may be determined that a vehicle incoming to the decision point on the given segment does not have ROW, while where such signs are found on (all) the other incoming stretches it may be determined that a vehicle incoming to the decision point on the given segment does have ROW. Any combination of signs indicative of ROW being present or absent may be considered, alone or in combination with other factors.

It will be appreciated that a definitive outcome for ROW determination may not be possible after performing any one of the look here, look back and look around processes (or if appropriate, look back in combination with look around). However, it may be possible to draw a conclusion from the result of performing multiple ones of these processes. Whether or not a determination is possible based on the methods of the present invention, determining ROW e.g. as in step 208 of Figure 3, while being based at least in part on traffic sign data relating to road segments as described herein, may additionally be based upon other factors. For example, road segment attributes such as functional road class may also be considered. A higher likelihood of priority may be associated with road segments of higher functional road class. This may be used to resolve any uncertainty remaining after performing analysis based on traffic signs, or in any event, to further increase certainty in the outcome. Another road segment attribute which may alternatively or additionally be taken into account may include the number of lanes of the road segment. A higher number of lanes may be indicative of a higher priority road segment, increasing the likelihood that a vehicle travelling along it will have priority.

Various options have been described for performing "look here", "look back" and "look around" processes in determining ROW for the given incoming road segment. While in some cases these are carried out sequentially, with the further processes only being carried out if needed i.e. if no determination can be made based on the previous process, it is also envisaged that one or more of these processes may be performed regardless of whether traffic sign data is found based on the previous process sufficient to determine ROW. For example, it may be decided that ROW determination will always involve consideration of all incoming road segments to the decision point, and, if necessary "look back" will be performed for any of these should appropriate traffic sign data not be found on the incoming road segment itself. In these cases, the various processes may be carried out at least in part in parallel. Thus, it should be understood that where multiple ones of look here, look back and/or look around are performed, one process need not be conditional on an outcome of another, and these processes may be performed simultaneously. It is also envisaged that "look around" might be performed without necessarily performing "look here". It is also envisaged that "look back" need not necessarily be performed in conjunction with some or all of the incoming road segments that are considered as part of "look here" or "look around".

Where "look around" is performed, whether or not simultaneously with "look here" or "look back" in relation to the given incoming road segment, the steps involved in assessing each of a plurality of "other" incoming road segments i.e. along the lines of Figure 3, and which may or may not involve a "look back" operation for that other incoming road segment, may be performed sequentially or in parallel. Thus, these operations may be performed independently.

Performing "look here", "look back" and "look around" sequentially and on a conditional basis such that further processes are only performed if no ROW determination has been possible based on the previous processes may provide advantages in avoiding unnecessary processing of data, and may be appropriate where this is of concern. Performing multiple ones or all of these processes regardless of their result may provide advantages in terms of confidence in the ROW determination, as greater context is provided, and may be appropriate where it is desired to provide more reliable ROW determination.

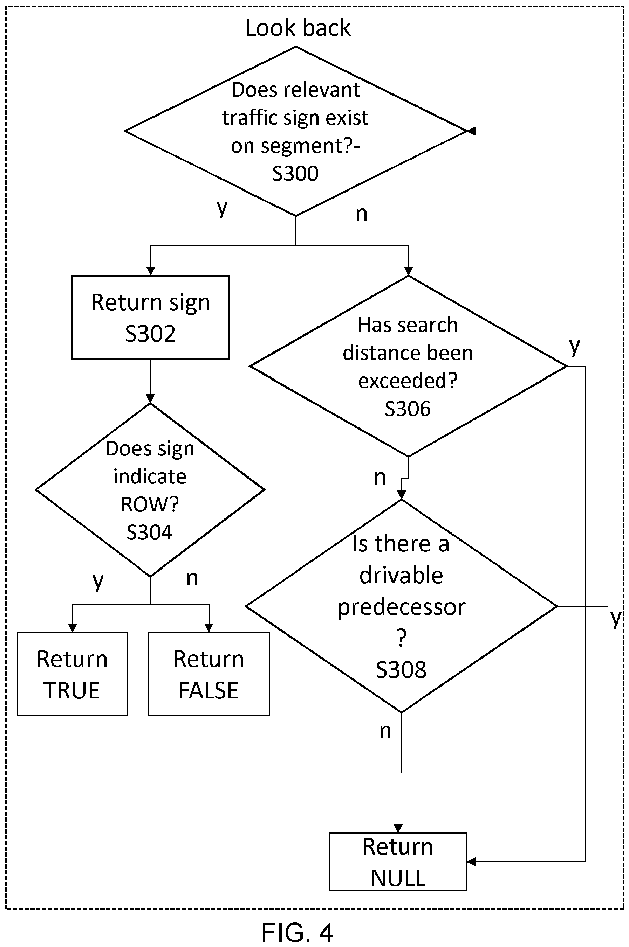

Some exemplary methods which may be performed by algorithms when implementing methods in accordance with the invention will now be described by reference to Figures 4-6.

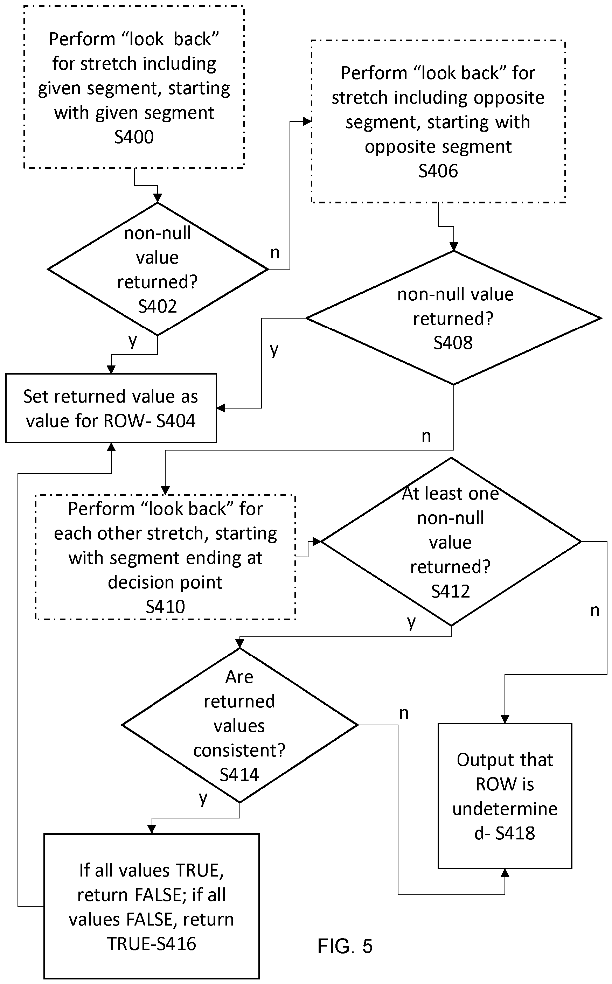

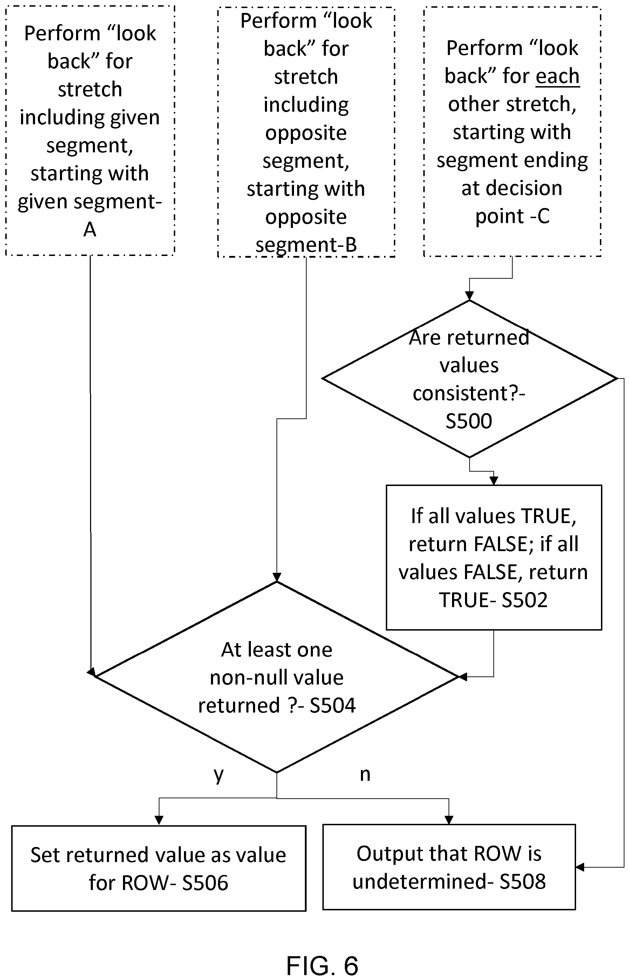

Figure 4 illustrates the "look back" process which may be performed. The process shown in Figure 4 also includes steps involved in "look here" when performed in relation to a stretch including the given segment, or "look around" when performed in relation to a stretch including another incoming segment. The method of Figure 4 is generally titled "look back" for ease of reference in the following Figures 5 and 6, since it is applicable to any incoming segment. The method of Figure 4 may be applied to any segment or stretch of interest, whether including the given incoming segment or another incoming segment to the decision point. This method determines ROW for that particular segment being considered, which may or may not be the given segment. Figures 5 and 6 illustrate how the general process of Figure 4 may be applied when considering different incoming segments at a decision point to determine ROW for the given road segment.

According to Figure 4, at Step 300 (S300) it is determined whether any relevant traffic sign (i.e. relevant to ROW determination) exists on a segment being considered e.g. the given segment or another segment incoming to the decision point as appropriate. Where the segment is the given segment, this is referred to as "look here".

If such a traffic sign is found, this is returned in S302.

In S304 it is determined whether this sign indicates ROW being present i.e. for travel along the applicable segment on which it was found in the relevant driving direction.

If the sign does indicate ROW, then the algorithm returns "TRUE" as an output i.e. indicating definitively that vehicles travelling along the segment do have ROW (such as priority), while if the sign does not indicate ROW i.e. it indicates definitively that vehicles do not have priority (such as yield, stop), then "FALSE" is returned as the output. Thus a determination is provided in both cases as to whether ROW is present. There may be situations where a definitive result cannot be provided when performing this process. Figures 5 and 6 describe how this may be dealt with in some exemplary arrangements.

If no relevant traffic sign is found on the segment in S300, the method proceeds to S306 and it is determined whether a search distance i.e. back from the decision point has been exceeded. If not, it is determined in S308 whether a drivable predecessor segment exists i.e. look back. If no such segment exists, a NULL result is provided.

If a drivable predecessor segment is found in S308, the method returns to S300. If a relevant traffic sign is found, steps S300-S304 are carried out in relation to this predecessor segment to try to find a sign which allows a determination of ROW to be made.

If no relevant sign is found, on this predecessor segment, the method proceeds to S306 again. If a search distance has not been exceeded, the method continues to S308 again to try to identify a further predecessor segment.

Thus the method iterates through predecessor segments along a stretch looking for relevant signs to allow ROW determination until the predetermined search distance is reached. As described above, other stopping conditions may alternatively or additionally be defined e.g. when a decision point between more than two drivable segments is reached. Such a decision point would correspond to a further decision point in the real world. However, where such a stopping condition is used, a 2 way intersection is effectively ignored, since such an intersection is not representative of a real world decision point, but merely represent map artefacts. Any intersection involving only non drivable roads e.g. pedestrian/bicycle paths may also be ignored as a stopping condition.

This method may therefore provide ROW determination for a stretch including the given segment or any other incoming segment to the decision point (whether an opposite segment if present or an "other" segment), the stretch potentially including one or more predecessors to that incoming segment.

Performing look back in this way enables ROW to be determined where a relevant sign is not present on the incoming road segment ending at the decision point but is present on a preceding road segment. The resulting process may be seen as considering a road stretch incoming to the decision point including the relevant incoming road segment, with the extent of the road stretch being defined during the look back process.

To support the method described with respect to Figure 4, it may first be defined which signs are considered relevant to ROW determination (for example as would be used in step 202 of Figure 3). These are the "relevant signs". For example, these may be yield, stop, priority road, crossing with priority over minor road. These are merely exemplary of possible road signs which may be included in the set, and an appropriate set of signs may be selected based e.g. upon a particular implementation and local regulations.

To support S304 (and as described in relation to step 306 of Figure 3), a set of signs deemed indicative of ROW being present (on the road segment including the sign) may be defined, to which any relevant sign found in S300 may be compared. In one example, the set of signs may be priority road, crossing with priority over minor road, although again, this is merely exemplary and other signs may be used as appropriate to provide a set of signs for assessing whether ROW is present.

Figure 4 illustrates a simple case in which it is determined whether found signs are indicative of ROW. The method may also involve determining whether a found sign is indicative of ROW not being present e.g. yield, stop. In this case, a finding that the sign does not indicate ROW may be taken to indicate that there is not ROW for a vehicle along the segment. This may be particularly applicable when using the method of Figure 4 in a "look around" process in relation to "other" incoming road stretches as described below, since a finding that there are signs indicative that ROW is not present on each of these "other" stretches may provide reasonable confidence that there is priority along the stretch including the given road segment.

Figure 5 is a flow chart showing how the principles of the "look back" process of Figure 4 may be applied to different incoming road segments at a decision point to determine whether a vehicle travelling along the given road segment has ROW. In this example, the segments are considered sequentially in a conditional approach, such that if a determination may be reached through considering certain segments, it is not necessary to proceed to the next step.

In S400 the "look back" process of Figure 4 is first performed for a road stretch incoming to the decision point and including the given segment for which ROW is to be determined. This involves first considering the given segment (S300-S304) of Figure 4 to determine whether any relevant traffic sign is found that can allow determination of ROW (which may be referred to as "look here"), and if not, then iterating through predecessor road segments to try to make such a determination ("look back").

In S402, it is determined whether a non-null value has been returned as a result of the process of Figure 4. If this is the case, then in S404 the returned value i.e. TRUE or FALSE i.e. indicating that vehicles travelling along the stretch including the given segment do or do not have priority, is returned as the output of the ROW determination process.

If no non-null value is returned from the process of Figure 4, then in S406 the method goes on to perform the "look back" process of Figure 4, but this time in relation to a stretch incoming to the decision point and including the opposite segment i.e. the incoming segment to the decision point for travel in a direction opposite to a continuation of the path of the vehicle on the other side of the decision point. First the incoming opposite segment itself is considered, and then, if necessary, look back is performed in relation to predecessor segments along a stretch starting from the opposite segment incoming to the decision point i.e. an "opposite stretch". Thus this "opposite stretch" is considered conditionally if no determination of ROW can be made based on the stretch including the given segment.

In S408 it is determined whether a non-null value has been returned in this process. If so, the method moves to S404 and this returned value is set as the determined value for ROW for the given segment. Thus, as described earlier, ROW for an opposite stretch including the opposite segment may be taken to correspond to ROW for the given segment.

If no non-null value for ROW is found when performing look back for the opposite stretch in S408, then the method moves to S410 and the "look here" method of Figure 4 is performed for each other (drivable) incoming stretch to the decision point (i.e. including an incoming segment other than the given segment or opposite segment). Thus, again, this process is performed conditionally, such that the "other" stretches are only considered if no ROW result can be obtained based on considering the stretch including the given segment at S400 or the opposite stretch at S406.

It is then determined in S412 whether at least one non-null value has been returned through consideration of the "other" incoming stretches in S410. If so, in S414 it is determined whether consistent values have been obtained. If so, then the method moves to S416. If all values obtained are "TRUE" then a FALSE determination of ROW is returned, while if all values are FALSE then a TRUE determination of ROW is returned.

The method then goes to S404 and returns the applicable value as the value for ROW of the given segment.

The consideration of the stretches including the opposite and other incoming road segments i.e. in S406-416 may be referred to as "look around".

If the returned values are inconsistent in S414 or no non-null value is returned in S412 the process moves to S418, and it is output that ROW is undetermined. Thus , if a conclusion regarding ROW cannot be made after considering the incoming stretches including the given segment, opposite segment and each other incoming segment, this is indicated. For safety reasons, it may be better to explicitly return "underdetermined" as a result, rather than returning a best guess.

It is envisaged that where road stretches including "other" segments are considered at S410, determination as to whether there is ROW on those segments might involve consideration of whether signs indicative that vehicles do not have ROW are present (rather than looking for signs indicative of ROW as suggested in Figure 4, S304). Finding that yield or stop signs are present on each other stretch may provide reasonable confidence that there is ROW on the given road segment. It may also be that the absence of signs indicating ROW is taken as implicit evidence that vehicles do not have ROW on a certain stretch.

This look around process set out in S406-S418 of Figure 5 effectively may consider all road stretches including road segments entering the decision point other than the given segment, but only where necessary. The road stretch including the road segment along a continuation of the path of the vehicle on the other side of the decision point, but for an opposite direction of travel toward the decision point i.e. the "opposite road segment", is considered separately from the remainder of the "other" incoming road stretches at S406 rather than S410, since the conclusions that may be drawn based on any signs found will differ as explained above. All relevant signs found (on any of the "other" road stretches) may be collected into a set or considered individually as found in S410.

Figure 6 is a flow chart summarizing an alternative way in which the incoming stretches including different incoming segments at a decision point may be analysed to obtain an ROW determination, using the method of Figure 4. In this case, rather than considering stretches including a given segment, opposite segment and other incoming segments sequentially, the process considers each type of stretch regardless of the outcome of any ROW determination process in any of the others. This may be carried out sequentially or at least in parallel. Thus, this implementation does not use a conditional approach as in Figure 5.

The "look back" method of Figure 4 is performed for a stretch including the given incoming segment to the decision point for which ROW is required (A), for a stretch including the "opposite" segment (B) and for each other stretch including a segment incoming to the decision point (that is not the given segment or opposite segment)-C. In each case, "look back" involves considering the segment incoming to the decision point for the relevant stretch and then working back to consider predecessor segments as needed until a stopping condition is met as described in relation to Figure 4. As mentioned above, considering the given segment itself may be referred to as "look here" and considering the opposite and other stretches may be referred to as "look around". The details of the way in which "look back" is performed for each of situations A, B and C may be as set out in relation to Figures 4 and 5.

For the case in which the stretches including "other" incoming segments are considered (C), a check stage S500 is include to determine whether the results of ROW determination based on each stretch are consistent. If all values are TRUE, this results in the value "FALSE" being returned, while if all values are "FALSE" then the value "TRUE" is returned- S502. This is because a finding of ROW on such an "other" stretch indicates that there is not ROW on the stretch including the given segment and vice versa. In contrast the determined value for ROW from cases A and B i.e. stretches including given segment and opposite segment, may be taken to correspond to the value for ROW on the given segment. In this example, it is required that the results are consistent for a determination to be made based on findings relating to these "other" stretches, although in other examples this need not be the case.

In S504 it is determined whether processes A, B and C have returned at least one non-null value (after the additional step to effectively invert the results of the determination for process C for "other" stretches). If so, the returned value is set as the value for the ROW of the given segment- S506. If not, it is output that ROW is undetermined- S508.

It is envisaged that if conflicting results are obtained between processes A, B and C, then on output that ROW is undetermined may also be made. However, depending upon a particular implementation the results of one of the processes e.g. process A may be weighted to override any conflicting result in another process e.g. process C. Where returned values in process C are inconsistent, in Figure 6 it is shown that it is output that ROW is undetermined. However, again, other implementations may simply disregard this result, and take a determination based on process A or B if either or both of these returns a non-null value.

Of course, as stated above, it is not necessary that each of the processes A, B and C are always performed. For example, processes B and C may be performed only where process A does not give a non-null value. It is envisaged that process C may not necessarily be performed if process B gives a results. Where all of the processes are performed, this may be done in parallel or sequentially. Within each of processes A, B and C, as Figure 4 illustrates, it may not be necessary to consider predecessor segments in all cases if the incoming segment to the decision point gives a result. While Figure 4 illustrates the consideration of predecessor segments as conditional on the result of considering the given incoming segment, this need not necessarily be the case, although it may be desirable to only consider those segments necessary to reduce processing power etc. required.

While Figure 6 uses a non-conditional approach to analysing incoming stretches to the decision point, it will be appreciated that the processing involved in considering different types of stretch may be carried out sequentially or at least in part in parallel.

While Figure 5 shows the opposite stretch being considered before the "other stretches", this need not be the case. It is envisaged that in some implementations the other stretches may be considered (if necessary) after the stretch including the given segment and before the "opposite" stretch.

Figures 4-6 illustrate a simple case in which ROW determination is based on the presence of ROW indicating signs. However, as discussed above, ROW determination may be more complex, involving consideration of other factors e.g. road class as well as found traffic signs. The output of the process may be more complex than a simple indication that ROW is present or not, or undetermined.

The determined ROW property in S404 or S506 may be delivered to the client ADAS or ADS application e.g. it may be delivered to an ADAS application via a standardized ADASIS v2 or ADASIS v3 interface.

The method may further involve the ADS or ADAS system using the determined ROW data. The data may be used in various manners by such systems, for example depending upon the level of automation. For example, ROW data can be used in an ADAS context to provide a warning to the user about a potential yield or stop condition, or may be used to optimize energy consumption. For ADS, it can be used to enhance vehicle perception as an extra 'sensor' to support movement conflict/priority resolution in relation to other vehicles. In general, the data may be used to support navigation of the decision point, whether by a human driver or using an autonomous system e.g. in intersection management. Alternatively or additionally the data may be used in optimization applications e.g. to optimize energy consumption, or in drive or route optimization. ROW may be used e.g. to determine a number of deceleration/acceleration cycles along a path to better estimate fuel consumption. In any case, the ROW value may be stored on board the vehicle for subsequent use by the ADS or ADAS or other vehicle systems.

It is envisaged that the principles herein may be extended to the case in which road segments include multiple lanes, supporting ROW determination at a lane level through the decision point.

It will be understood that the present invention in its various embodiments which use digital map data to determine ROW data based on traffic sign data has a number of advantages.

This avoids needing to store ROW data as part of the digital map, with the data instead being derived e.g. on board a vehicle, as required, for those decision points that are relevant. This avoids the need to store redundant data and facilitates driving and maintaining the digital map. As ROW is not a primary map feature, but can only be derived using primary map features, it undesirably would introduce interdependence between map features if included in the map data, resulting in additional computation, storage, and map maintenance requirements. The inclusion of such additional data would also add to OTA map delivery requirements e.g. using vehicle horizon data. Attempting to include ROW data for all road segments of a map so as to ensure ROW data is available for any desired transition at an intersection, would also be prohibitive. Generally, an N-way intersection can require up-to C(N, 2) assignments of the Right of Way, where C(N,K) is the number of combinations (N choose K).

On the other hand, in comparison to camera based systems, the techniques of the present invention enable ROW data to be obtained in a greater range of situations, even where a traffic sign indicative of ROW is not present on the given incoming segment. This is because it enables other incoming road segments and/or preceding road segments to be considered, allowing ROW for the given segment to be inferred from any relevant traffic signs found on a greater number of possible road segments. This may provide greater context to the determination, allowing ROW data to be obtained more readily for a greater number of decision points, and enhancing the reliability of the ROW data. A camera based technique, similar to a technique employed by a human driver, would need to be based on traffic signs in close proximity to the vehicle and facing the vehicle. For example, an explicit priority road sign may not be present on the given road segment. However, stop and yield signs controlling traffic coming into the decision point from other direction ay be present, implicitly granting priority to a vehicle approaching the decision point along the given road segment.

As the techniques do not rely on camera data, there is greater reliability, even where visibility of any traffic signs may be impeded e.g. in adverse weather conditions, or if the signs are damaged.

As the techniques do not rely on being able to visualise traffic signs, it is possible to perform the methods in relation to decision points further ahead of a vehicle, or even where the vehicle is not travelling along a path through the road network e.g. during route/path planning or optimization methods.

In summary the techniques described herein may enhance ADAS automation and optimization applications by providing ROW data which it may not be possible to determine by camera-only systems. The determination of ROW may be performed at runtime and avoids needing to provide ROW data as part of a digital map. This has the following advantages:
1. Eliminates the need for an additional process in map-making
2. Avoids redundancy of derived map features
3. Saves map storage size and delivery costs
4. Determines Right of Way only where necessary for this vehicle, i.e., not over the entire map

## Claims

1. A computer-implemented method of determining Right of Way (ROW) data in respect of travel along a given road segment entering a decision point of a road network in a geographic area covered by a digital map, the method comprising;
analysing digital map data relating to one or more road stretches entering the decision point to identify one or more traffic signs represented by the digital map data along the one or more road stretches that are relevant to ROW at the decision point, each road stretch comprising at least a respective road segment entering the decision point;
and using data indicative of the identified one or more traffic signs relevant to ROW at the decision point to determine data indicative of ROW at the decision point for travel along the given road segment entering the decision point;
wherein the given road segment entering the decision point forms part of a path for a vehicle through the road network and the decision point is a decision point along the path of the vehicle.

2. The method of claim 1 wherein the path for the vehicle is a path being traversed by the vehicle through the road network and the decision point is an upcoming decision point along the path of the vehicle, the method comprising determining the ROW data during travel of the vehicle along the path through the road network.

3. The method of claim 2 wherein the decision point is the next decision point to be encountered by the vehicle along the path, optionally wherein the current position of the vehicle is on a road stretch comprising the given road segment entering the decision point.

4. The method of any preceding claim wherein the method is performed by a client device associated with the vehicle.

5. The method of any preceding claim wherein the one or more road stretches entering the decision point for which digital map data is analysed to identify traffic signs include a road stretch comprising the given road segment.

6. The method of any preceding claim wherein the path for the vehicle has a continuation along a road segment extending away from the decision point and the one or more road stretches entering the decision point for which digital map data is analysed to identify traffic signs relevant to ROW include a road stretch comprising a road segment for travel toward the decision point which is in an opposite direction to the road segment for travel along the continuation of the path.

7. The method of any preceding claim wherein the one or more road stretches entering the decision point for which digital map data is analysed to identify traffic signs relevant to ROW include at least one road stretch comprising a road segment entering the decision point other than the given road segment.

8. The method of claim 7 as dependent upon claim 6 wherein the one or more road stretches entering the decision point for which digital map data is analysed to identify traffic signs relevant to ROW include at least one road stretch comprising a road segment entering the decision point other than the given road segment and other than the road stretch comprising the road segment for travel toward the decision point which is in an opposite direction to the road segment for travel along the continuation of the path.

9. The method of claim 6, 7 or 8 as dependent on claim 5 wherein the method comprises analysing digital map data relating both to the road stretch comprising the given road segment and to at least one road stretch comprising a road segment entering the decision point other than the given road segment, for example regardless of whether any traffic signs relevant to ROW for vehicles travelling toward the decision point are found on the road stretch comprising the given road segment;
or wherein the method comprises analysing digital map data relating to the road stretch comprising the given road segment to identify whether any traffic signs relevant to ROW for vehicles travelling toward the decision point are present, and, if no relevant traffic signs are found or if any relevant traffic signs found are determined to be insufficient to determine the data indicative of ROW, then analysing digital map data relating to at least one road stretch comprising a road segment entering the decision point other than the given road segment to identify one or more relevant traffic signs.

10. The method of any preceding claim wherein the one or more road stretches entering the decision point for which digital map data is analysed include road stretches comprising each road segment entering the decision point;
and/or wherein the step of analysing digital map data relating to a road stretch entering the decision point to identify one or more traffic signs represented by the digital map data that are relevant to ROW for vehicles at the decision point comprises, for each road stretch considered; analysing digital map data relating to a road segment entering the decision point to determine whether any traffic signs relevant to ROW for vehicles travelling toward the decision point are associated with the road segment, and if no such relevant traffic sign is found, analysing digital map data relating to a preceding road segment to determine whether any traffic signs relevant to ROW for vehicles travelling toward the decision point are present; and optionally repeating such steps until either i) a relevant traffic sign is found, ii) a predetermined search distance is reached or iii) a previous decision point is reached.

11. The method of any preceding claim comprising additionally using data indicative of a road class and/or number of lanes of road segments of the one or more road stretches analysed in determining the data indicative of ROW at the decision point.

12. The method of any preceding claim wherein, for each road stretch considered in the step of analysing digital map data to identify one or more traffic signs along the road stretch relevant to ROW at the decision point, the step of identifying the one or more traffic signs relevant to ROW at the decision point comprises comparing one or more traffic signs for vehicles travelling toward the decision point found along the road stretch to a predetermined set of traffic sign types deemed relevant to ROW determination, for example where the predetermined set of traffic sign types includes signs indicative of the priority of vehicles at the decision points, such as; yield, stop, or priority related signs;
and/or wherein the step of using the data indicative of the identified one or more relevant traffic signs to determine data indicative of ROW at the decision point for travel along the given road segment entering the decision point comprises comparing the identified one or more traffic signs to a predetermined set of traffic sign types deemed indicative of a vehicle having ROW, for example where the predetermined set of traffic sign types includes signs indicative of vehicles having ROW over other vehicles, such as; priority road, crossing with priority over minor road.

13. The method of any preceding claim further comprising providing the determined ROW data to an ADAS or ADS, for example wherein the ROW data is used by the ADAS or ADS to support navigation of the decision point or to perform optimization of driving along the path.

14. The method of any preceding claim further comprising obtaining the digital map data for analysis, wherein the digital map data is obtained as part of vehicle horizon data relating to a portion of the road network ahead.

15. A computer processing system for processing digital map data, wherein the computer processing system is configured to perform a method according to any one of claims 1 to 14; or computer software comprising instructions which, when executed on a computer processing system, cause the computer processing system to perform the method of any one of claims 1 to 14.
